(19) Europäisches Patentamt
European Patent Office
Office européen des brevets

(11) EP 3 203 133 A1

(12) EUROPEAN PATENT APPLICATION
published in accordance with Art. 153(4) EPC

(43) Date of publication:
09.08.2017 Bulletin 2017/32

(51) Int Cl.:
F16L 59/06 (2006.01)     B32B 27/00 (2006.01)
B32B 27/30 (2006.01)

(21) Application number: 14903008.2

(22) Date of filing: 03.10.2014

(86) International application number:
PCT/JP2014/076529

(87) International publication number:
WO 2016/051584 (07.04.2016 Gazette 2016/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Toyo Seikan Group Holdings, Ltd.
Shinagawa-ku
Tokyo 141-8627 (JP)

(72) Inventors:
• UEDA, Kousuke
Yokohama-shi
Kanagawa 240-0062 (JP)

• OBU, Yusuke
Yokohama-shi
Kanagawa 240-0062 (JP)
• KAWAI, Kashiko
Yokohama-shi
Kanagawa 240-0062 (JP)
• NANGOU, Shunya
Yokohama-shi
Kanagawa 240-0062 (JP)

(74) Representative: J A Kemp
14 South Square
Gray's Inn
London WC1R 5JJ (GB)

(54) VACUUM HEAT-INSULATION MATERIAL

(57) A vacuum heat insulating material including a core material and a sheath for covering the core material, the interior thereof being sealed to maintain a reduced pressure therein, wherein the sheath includes a gas-barrier laminate that has at least a heat-melt-adhesion layer, a vapor-deposited layer and a gas-barrier material, and the gas-barrier material has a gas-barrier layer that includes a polycarboxylic acid type polymer and contains a monovalent metal element in an amount of not more than 1.4% by weight, a polyvalent metal element in an amount of at least not less than 5.0% by weight, and a nitrogen element in an amount of 0.01 to 3.0% by weight per the total weight of nitrogen and carbon. The vacuum heat insulating material has excellent heat insulating capability and gas-barrier property, and sustains excellent heat insulating capability over extended periods of time as well as excellent flexibility and waterproof property.

Fig. 4

EP 3 203 133 A1

## Description

Technical Field:

This invention relates to a vacuum heat insulating material. More specifically, this invention relates to a vacuum heat insulating material equipped with, as sheath, a gas-barrier laminate that has excellent gas-barrier property and heat insulating capability and is also excellent in productivity.

Background Art:

A vacuum heat insulating material is obtained by covering a core material of a porous structure with a sheath and, thereafter, reducing the pressure in the interior thereof followed by sealing. The vacuum heat insulating material of this type is almost free from the conduction of heat due to gases, is capable of providing excellent heat insulating effect despite of its small thickness as compared to such heat insulating materials as glass wool and the like, and has, therefore, been used in a variety of fields related to living such as refrigerators, rice cookers and the like or related to housing such as floor heater, heat insulating panels and the like.

In such vacuum heat insulating materials, the sheath for covering the core material must have not only excellent sealing property but also gas-barrier property reliable enough to maintain the state of reduced pressure in the vacuum heat insulating material. So far, a laminate including an aluminum foil has been widely used as the sheath.

However, use of the laminate including the aluminum foil as a sheath involves a problem in that aluminum has such a high heat conductivity that the effect of heat insulation decreases due to the conduction of heat through the aluminum foil.

To solve the above problem due to the aluminum foil, there have been proposed the arts of using a laminate having a vapor-deposited film formed by the vapor deposition of a metal or an inorganic material as the sheath of the vacuum heat insulating material (patent documents 1 and 2) accompanied, however, by such a problem that the gas-barrier property of the vapor-deposited film decreases due to the occurrence of cracks and pinholes.

Under such circumstances, there have, further, been proposed the arts of using, as the sheath of the vacuum heat insulating material, a laminated film that includes a vapor-deposited layer, a gas-barrier polyacrylic acid type resin layer and a heat-melt-adhesion layer, the gas-barrier polyacrylic acid type resin layer comprising a mixture of a polyalcohol type polymer and a polyacrylic acid type polymer (patent documents 3 and 4).

The polyacrylic acid type resin layer used as the sheath is formed by flowing a mixture solution of the polyalcohol type polymer and the polyacrylic acid type polymer onto the vapor-deposited layer so as to be stretched thereon to thereby form a dry coating thereof which is then heat-treated at a high temperature of not lower than 100°C and is dipped in water that contains metal ions. That is, free carboxylic acids of the polyacrylic acid type polymer that had not been ester-bonded together are now ionically crosslinked together to realize excellent gas-barrier property.

Prior Art Documents:

Patent Documents:

Patent document 1: JP-A-2004-172493
Patent document 2: JP-A-2004-130654
Patent document 3: JP-A-2005-337405
Patent document 4: Japanese Patent No. 3685206

Outline of the Invention:

Problems that the Invention is to Solve:

The above polyacrylic acid type resin, however, must be crosslinked to a high degree by being heated at a high temperature of not lower than 100°C or for extended periods of time causing, however, a problem of serious effect on the vapor-deposited layer. In order to improve the gas-barrier property, further, the layer must be dipped in water for extended periods of time so as to be crosslinked with metal ions, leaving such problems as poor productivity while consuming large amounts of energy and water. Flexibility is not satisfactory, either, and the vapor-deposited layer cannot be protected to a sufficient degree. In order to further improve the gas-barrier property of the sheath under such circumstances, it has been desired to form a gas-barrier layer comprising chiefly an organic material that has more excellent gas-barrier property and flexibility.

Further, when it is attempted to laminate, on the gas-barrier material, a layer of another thermoplastic resin by the extrusion-coating method, the gas-barrier material must be protected by laminating another base material, in advance, on the gas-barrier material by the dry lamination method. Therefore, an increased number of steps are required, and satisfactory results are not still obtained in regard to productivity and economy. Besides, since an adhesive resin is used for the dry lamination, there remains a probability that the solvent in the adhesive resin may remain in the gas-barrier laminate. The residual solvent may deteriorate the state of reduced pressure in the vacuum heat insulating material. In producing the gas-barrier laminate, therefore, it has been desired to decrease the number of times of dry lamination.

In the conventional sheaths, further, the water vapor-barrier property had been attained by using an aluminum foil. If the aluminum foil is not used, the water vapor-barrier property cannot be attained to a sufficient degree because of the reasons described above. If it is attempted to attain the water vapor-barrier property by using a moisture-proof resin or the like, then the thickness of the sheath increases making it difficult to decrease the thickness and weight of the sheath.

It is, therefore, an object of the present invention to provide a vacuum heat insulating material using a sheath that has excellent heat insulating capability and gas-barrier property, and sustains excellent heat insulating capability over extended periods of time as well as excellent flexibility and waterproof property.

Another object of the present invention is to provide a vacuum heat insulating material excelling in productivity and economy by using a sheath that does not have to be heated at a high temperature and that is formed through a decreased number of times of dry lamination.

A further object of the present invention is to provide a vacuum heat insulating material using a sheath that attains water vapor-barrier property and ability for shutting off radiant heat (reflection factor) based on the vapor-deposited layer, the sheath having a decreased thickness.

Means for Solving the Problems:

According to the present invention, there is provided a vacuum heat insulating material including a core material and a sheath for covering the core material, the interior of the vacuum heat insulating material being sealed to maintain a reduced pressure therein, wherein the sheath includes a gas-barrier laminate that has at least a heat-melt-adhesion layer, a vapor-deposited layer and a gas-barrier material, and the gas-barrier material has a gas-barrier layer that includes a polycarboxylic acid type polymer and contains a monovalent metal element in an amount of not more than 1.4% by weight, a polyvalent metal element in an amount of at least not less than 5.0% by weight, and a nitrogen element in an amount of 0.01 to 3.0% by weight per the total weight of nitrogen and carbon.

In the vacuum heat insulating material of the present invention, it is desired that:

1. The polycarboxylic acid type polymer is a poly(meth)acrylic acid;
2. The polycarboxylic acid type polymer is partly neutralized in a range of a molar ratio relative to the carboxyl groups of not more than 4.5%;
3. The monovalent metal element is sodium or potassium;
4. The polyvalent metal element is calcium or magnesium;
5. In the surface layer of the gas-barrier layer, the content of nitrogen is not less than 1 atm% per the total weight of oxygen and nitrogen;
6. The heat-melt-adhesion layer is formed by extrusion-applying a thermoplastic resin onto the gas-barrier material;
7. The gas-barrier layer is formed on a plastic base material on which a layer has been vapor-deposited;
8. The vacuum heat insulating material includes at least a gas-barrier laminate in which the gas-barrier layer is formed on at least one of the layers that have been vapor-deposited on both surfaces of the plastic base material, and the heat-melt-adhesion layer of the thermoplastic resin is formed by being extrusion-applied onto the gas-barrier layer;
9. The thermoplastic resin is a polyolefin resin, an ethylene-(meth)acrylic acid copolymer or an ionomer resin;
10. The thermoplastic resin is any one of a polyolefin resin polymerized by using a single site type catalyst, a polyolefin resin to which no antioxidant has been added, or a polyolefin resin containing a reaction group capable of forming a chemical bond with a carboxyl group or a hydroxyl group;
11. The polyolefin resin has a density of not more than 0.950 $g/cm^3$;
12. The polyolefin resin has an MFR of not less than 7.0 g/10 min.;
13. The gas-barrier layer has a weight loss of not more than 10% as measured by the thermogravimetric analysis (TGA) from 200°C up to 320°C at a temperature elevating rate of 10°C/min., and has a difference of not less than 0.010 of when tan δ at 50°C is subtracted from tan δ at 200°C in the measurement of dynamic viscoelasticity (DMS) at 20 Hz;
14. The gas-barrier material has an undercoating that contains an isocyanate compound having at least two isocyanate groups in a molecule thereof and is formed on one surface of either the layer vapor-deposited on the plastic base material or the plastic base material, the gas-barrier material, further, having a gas-barrier layer formed on the undercoating;

15. At least either the gas-barrier layer or the undercoating is adjacent to the vapor-deposited layer;

16. The gas-barrier material has two vapor-deposited layers, and the gas-barrier layer and the undercoating are formed between the two vapor-deposited layers;

17. Both the gas-barrier layer and the undercoating are adjacent to the vapor-deposited layers;

18. The undercoating contains an alkaline compound of a polyvalent metal;

19. The alkaline compound of the polyvalent metal includes at least a carbonate or a hydroxide of calcium or magnesium;

20. The isocyanate compound is a combination of a straight-chain aliphatic isocyanate compound and an alicyclic isocyanate compound having an alicyclic structure in the skeleton thereof;

21. The aliphatic isocyanate compound has an isocyanulate structure; and

22. A region (x) free of the alkaline compound of the polyvalent metal is formed in the undercoating on the side of the gas-barrier layer, the nitrogen content in the region (x) being larger than the nitrogen content in the undercoating other than the region (x).


Effects of the Invention:

The vacuum heat insulating material of the invention uses, as the sheath, a gas-barrier laminate of vapor-deposited layers and a gas-barrier layers having excellent gas-barrier property, and is, therefore, capable of exhibiting excellent heat insulating effect over extended periods of time. Besides, the vacuum heat insulating material of the invention uses no aluminum foil that was so far used for the sheath of the conventional vacuum heat insulating materials to maintain gas-barrier property. Therefore, there is no probability of decrease in the heat insulating effect caused by the heat bridge as a result of using the aluminum foil.

Besides, the gas-barrier material exhibits excellent gas-barrier property and waterproof property even if the polycarboxylic acid type polymer is not dared to be crosslinked based on the covalence bond by using a crosslinking agent. It is, therefore, allowed to simplify the steps of heat treatment necessary for the crosslinking reaction.

Further, upon forming a gas-barrier layer on the undercoating that contains a polyvalent metal-containing composition, it is made possible to improve the ionic crosslinking ratio due to the polyvalent metal even without effecting the dipping treatment or the spraying treatment and, therefore, to produce a sheath having excellent gas-barrier property maintaining good productivity. Moreover, the undercoating contains an isocyanate compound that has at least two isocyanate groups in a molecule thereof, permitting the isocyanate compound to be present near the interfaces of gas barrier layer/undercoating and undercoating/base material. Therefore, there takes place interfacial reaction with functional groups such as carboxyl groups of the polycarboxylic acid type polymer or with hydroxyl groups contained in the plastic base material, or there is produced electric cohesive force among the polar groups on the interface enabling the adhesion to be further improved between the layers.

Moreover, the gas-barrier laminate has two vapor-deposited layers and excels not only in the gas-barrier property but also in the capability (reflective index) of shutting off the radiant heat even without using the aluminum foil. This makes it possible to decrease the thickness of the sheath and, therefore, to decrease the thickness of the vacuum heat insulating material and to decrease the weight thereof.

Further, the gas-barrier laminate used as the sheath of the present invention can be directly laminated on the gas-barrier layer by extrusion-laminating a thermoplastic resin that constitutes a melt-adhesion layer. Unlike the gas-barrier material comprising the conventional polycarboxylic acid type polymer, therefore, there is no need of protecting the gas-barrier layer by laminating another base material in advance by dry lamination at the time of extrusion-lamination on the gas-barrier layer, offering an advantage in productivity and economy. Moreover, there is no need of using a solvent at the time of lamination. Therefore, no solvent due to forming adhesive layers remains in the gas-barrier laminate. The residual solvent may impair the state of reduced pressure in the vacuum heat insulating material. In this regard, too, the vacuum heat insulating material of the present invention is capable of exhibiting excellent heat insulating effect over extended periods of time.

Namely, the gas-barrier layer of the gas-barrier laminate used for the vacuum heat insulating material of the invention exhibits resistance against being thermally decomposed in a range of working temperatures at which the extrusion-lamination is conducted and, besides, maintains some portions uncrosslinked in the range of working temperatures, sustaining a predetermined molecular motion due to heat energy, relaxing the stress produced in the gas-barrier layer and, therefore, maintaining crack resistance, making it possible to extrude and apply the thermoplastic resin directly onto the gas-barrier layer.

The resistance against thermal decomposition over the range of working temperatures can be represented by a weight loss in the measurement by the thermogravimetric analysis (TGA) while the crack resistance over the range of working temperatures can be represented a difference in tan $\delta$ in the measurement of dynamic viscoelasticity (DMS).

In the present invention, it is desired that the gas-barrier layer comprising the polycarboxylic acid type polymer in the gas barrier material has a weight loss of not more than 10% and ,specifically, in a range of 3 to 9%, as measured by the thermogravimetric analysis (TGA) from 200°C up to 320°C at a temperature elevating rate of 10°C/min., and has a difference of not less than 0.010 and, specifically, in a range of 0.011 to 0.060, of when tan $\delta$ at 50°C is subtracted from tan $\delta$ at 200°C in the measurement of dynamic viscoelasticity (DMS) at 20 Hz. This makes it possible to more favorably extrude and apply the thermoplastic resin directly onto the gas-barrier layer.

In the gas-barrier laminate used as the sheath of the present invention, the thermoplastic resin that is directly extruded and laminated on the gas-barrier layer is an ethylene-(meth)acrylic copolymer, an ionomer resin or a polyolefin resin. In this case, despite the thermoplastic resin is extruded onto the gas-barrier layer, the gas-barrier layer is not thermally decomposed but develops excellent adhesiveness to the gas-barrier layer contributing to preventing the interlayer peeling. Moreover, even in case the gas-barrier laminate happens to receive stress such as of bending, the gas-barrier layer is suppressed from developing cracks, and gas-barrier property is exhibited maintaining stability.

Brief Description of the Drawings:

[Fig. 1] is a view illustrating a structure in cross section of a vacuum heat insulating material of the present invention.
[Fig. 2] is a view illustrating a laminated structure of a gas-barrier material used as a sheath of the vacuum heat insulating material of the present invention.
[Fig. 3] is a view illustrating another laminated structure of the gas-barrier material used as the sheath of the vacuum heat insulating material of the present invention.
[Fig. 4] is a view illustrating a laminated structure of the gas-barrier laminated material used as the sheath of the vacuum heat insulating material of the present invention.
[Fig. 5] is a view illustrating a further laminated structure of the gas-barrier laminated material used as the sheath of the vacuum heat insulating material of the present invention.
[Fig. 6] is a view illustrating a still further laminated structure of the gas-barrier laminated material used as the sheath of the vacuum heat insulating material of the present invention.
[Fig. 7] is a view illustrating a yet further laminated structure of the gas-barrier laminated material used as the sheath of the vacuum heat insulating material of the present invention.
[Fig. 8] is a view illustrating a further laminated structure of the gas-barrier material used as the vacuum heat insulating material of the present invention.
[Fig. 9] is a view illustrating another laminated structure of the gas-barrier material used as the vacuum heat insulating material of the present invention.
[Fig. 10] is a view illustrating yet another laminated structure of the gas-barrier material used as the vacuum heat insulating material of the present invention.
[Fig. 11] is a view illustrating a further laminated structure of the gas-barrier material used as the vacuum heat insulating material of the present invention.
[Fig. 12] is a view illustrating still further laminated structure of the gas-barrier material used as the vacuum heat insulating material of the present invention.

Modes for Carrying Out the Invention:

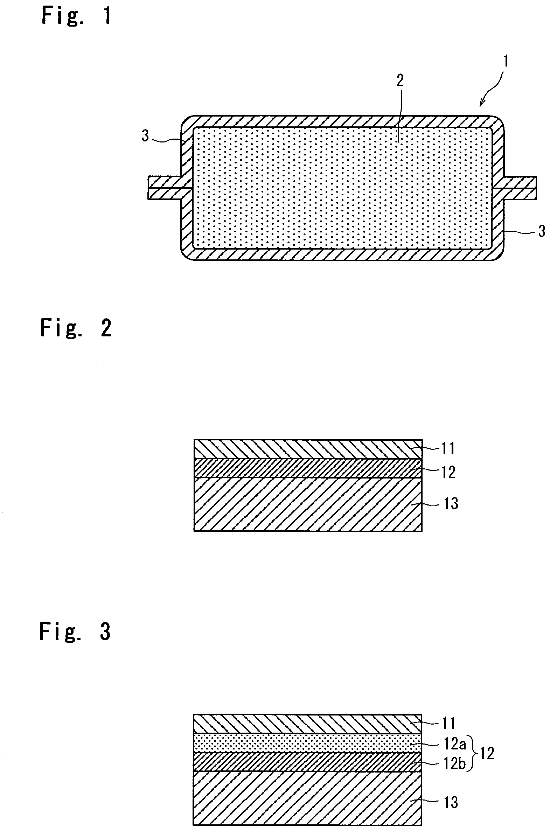

Referring to Fig. 1, a vacuum heat insulating material 1 includes a core material 2 and a sheath 3 for covering the core material 2. The sheath is heat-sealed by melt-adhesion, and the interior thereof is maintained in a state of a reduced pressure. In the invention, an important feature resides in the use of a gas-barrier laminate having the above-mentioned specific gas-barrier material as the sheath.

Namely, the gas-barrier material obtained by ionically crosslinking the polycarboxylic acid type polymer with a polyvalent metal has heretofore been known. According to the present invention, however, it was discovered that upon controlling the contents of a monovalent metal element, a polyvalent metal element and nitrogen in the gas-barrier material to lie in predetermined ranges, there are obtained excellent gas-barrier property, flexibility, water-proof property and water-proof property after the bend working. Here, further, it was discovered that upon using the above gas-barrier material as a sheath of the vacuum heat insulating materials, the above-mentioned effects can be realized.

Moreover, upon forming the vapor-deposited layers in a number of two, it is allowed to attain not only the gas-barrier property but also the ability (reflection factor) for shutting off the radiant heat without lowering the effect of insulating the heat, as well as to reduce the thickness and weight of the sheath.

The monovalent metal element and the polyvalent metal element in the gas-barrier layer in the gas-barrier material of the present invention are derived, respectively, from a monovalent metal-containing compound that is used for partly neutralizing the polycarboxylic acid type polymer and from an alkaline compound of a polyvalent metal that is used for ionically crosslinking the carboxyl groups of the polycarboxylic acid type polymer. Further, the nitrogen element is derived from an isocyanate compound. With the contents of these elements lying in the above-mentioned ranges, there are exhibited the above-mentioned actions and effects.

The contents of these metal elements can be measured by using an ICP mass analyzer after the gas-barrier layer has been incinerated. The nitrogen element in the gas-barrier layer can be measured by the combustion method. Further, the contents of carbon, oxygen and nitrogen atoms in the surface layer of the gas-barrier layer can be measured by the surface analysis based on the XPS (X-ray Photo-electronic Spectroscopy).

(Gas-barrier material)

The gas-barrier material used for the sheath of the vacuum heat insulating material of the present invention comprises a polycarboxylic acid type polymer, and has at least a gas-barrier layer that contains not more than 1.4% by weight of a monovalent metal element, at least not less than 5.0% by weight of a polyvalent metal element, and a nitrogen element in an amount of 0.01 to 3.0% by weight per the total weight of nitrogen and carbon. The gas-barrier material is provided as a gas-barrier material which comprises a gas-barrier layer alone, as a gas-barrier material having a gas-barrier layer formed on a plastic base material, or as a gas-barrier material having the gas-barrier layer formed on the plastic base material via an undercoating. Preferably, however, the gas-barrier material comprises, as shown in Fig. 2, a gas-barrier layer 11 that is formed on a plastic base material 13 via an undercoating 12.

More preferably, the gas-barrier material may be the one obtained by forming the gas-barrier layer on the plastic base material on which a layer has been vapor-deposited, or the one obtained by forming the gas-barrier layer on the plastic base material on which a layer has been vapor-deposited via an undercoating and, further, vapor-depositing another film on the gas-barrier layer. Or the gas-barrier material may be the one obtained by using a plastic base material on which no layer has been vapor-deposited, and forming the gas-barrier layer on the plastic base material and, further, vapor-depositing a layer on the gas-barrier layer, or forming the gas-barrier layer on the plastic base material via an undercoating and, further, vapor-depositing a layer on the gas-barrier layer.

The gas-barrier material used in the present invention uses the polycarboxylic acid type polymer as a main constituent component, the carboxyl groups of the polycarboxylic acid type polymer being ionically crosslinked with a polyvalent metal. Moreover, due to the presence of the nitrogen element derived from the isocyanate compound, the gas-barrier material exhibits excellent gas-barrier property, flexibility, waterproof property, waterproof property after the bend working, and anti-blocking property. Here, it is important that in the gas-barrier layer, the contents of the monovalent metal element, polyvalent metal element and nitrogen element are within the above-mentioned ranges.

The gas-barrier layer having the above features are formed as a sheet, a film or a coating by using a composition for forming the gas-barrier layer that contains a polycarboxylic acid type polymer, a basic compound containing a monovalent metal element necessary for partly neutralizing the polymer and an isocyanate compound. By ionically crosslinking the carboxyl groups in the gas-barrier layer with a polyvalent metal, the gas-barrier layer is obtained as a simple gas-barrier layer or a gas-barrier material having the gas-barrier layer formed on the plastic base material.

Further, in the case of the gas-barrier material comprising a combination of the gas-barrier layer and the undercoating, a layer is formed by applying a solution containing the polycarboxylic acid type polymer onto the undercoating that contains the isocyanate compound and the alkaline compound of a polyvalent metal. Namely, polyvalent metal ions and the isocyanate compound are efficiently fed from the undercoating into the polycarboxylic acid type polymer, and whereby the gas-barrier layer is formed on the undercoating or the gas-barrier layer is formed on the plastic base material via the undercoating to thereby form the gas-barrier material.

[Polycarboxylic acid type polymer]

The polycarboxylic acid type polymer that constitutes the gas-barrier layer can be partly neutralized with a monovalent metal element within a range described below to realize the above-mentioned action and effect of waterproof property. For controlling the amount of the monovalent metal element in the gas-barrier material to lie in the above-mentioned range, it is desired to use the polycarboxylic acid type polymer that is partly neutralized with the monovalent metal element to a degree in a range of not more than 4.5% and, more preferably, not more than 4.0% as a molar ratio to the carboxyl groups. If the amount of neutralization exceeds the above range, the waterproof property after the bend working and the gas-barrier property under high temperature and highly humid conditions become poorer than those of when the amount of neutralization is within the above range.

As the monovalent metal, it is specifically desired to use sodium or potassium. By using a hydroxide thereof as the monovalent metal compound, therefore, the polycarboxylic acid type polymer is neutralized.

As the polycarboxlic acid type polymer, there can be exemplified homopolymers of a monomer having a carboxyl group or copolymers thereof, such as polyacrylic acid, polymethacrylic acid, polymaleic acid, polyitaconic acid, and acrylic acid-methacrylic acid copolymer. Among them, the polyacrylic acid and polymethacrylic acid are particularly preferred.

It is desired that the polycarboxlic acid type polymer has a "weight average molecular weight" in a range of 2,000 to 5,000,000 and, specifically, 10,000 to 1,000,000 though not specifically limited thereto only.

The "weight average molecular weight" is found from the chromatogram and a calibration curve of a standard polycarboxylic acid type polymer by using two separation columns i.e. , "TSK G4000PWXL" and "TSK G3000PWXL" (produced by Tosoh Corporation.), using 50 mmols of phosphoric acid aqueous solution as an eluent, at 40°C and at a flow rate of 1.0 ml/min.

[Isocyanate compound]

The gas-barrier layer that contains the isocyanate compound also contains the nitrogen element in an amount in the above-mentioned range.

The isocyanate compound is suitably selected out of the isocyanate compounds that are exemplified below as isocyanate type curing agents used for the undercoating. Among the isocyanate compounds, it is desired to use the one that is poorly compatible with the polycarboxylic acid type polymer, such as isophorone diisocyanate and derivatives thereof. This enables the isocyanate compound to efficiently bleed out on the surface of the gas-barrier material, to form chemical bonds due to the isocyanate compound in the surface of the gas-barrier material and, therefore, to impart waterproof property after the bend working to the gas-barrier layer.

[Gas-barrier material without undercoating]

To prepare the gas-barrier material without undercoating, there is prepared a composition for forming the gas-barrier layer by using a polycarboxylic acid type polymer, a basic compound containing a monovalent metal element if the polymer is to be partly neutralized, and an isocyanate compound. The composition for forming the gas-barrier layer is then formed into a film, a sheet or a coating, and the carboxyl groups of the polycarboxylic acid polymer therein are ionically crosslinked with a composition that contains an alkaline compound of a polyvalent metal.

The composition for forming the gas-barrier layer can be prepared by dissolving the polycarboxylic acid type polymer and the isocyanate compound in a solvent that contains water, or by mixing together the water-containing solutions of these components.

The solvent for dissolving the polycarboxylic acid type polymer may be water alone, but is a mixed solvent of alcohol such as methanol, ethanol or isopropanol, ketone such as 2-butanone or acetone, or aromatic solvent such as toluene with water. Specifically, however, the solvent is a combination of water and a solvent having a boiling point lower than that of water.

From the standpoint of bleeding out the isocyanate compound, it is desired to use the organic solvent in an amount of 10 to 400 parts by weight per 100 parts by weight of water.

An inorganic dispersion can be contained in addition to the above components. The inorganic dispersion works to block water that infiltrates from the exterior and to protect the gas-barrier material, and helps further improve the gas-barrier property and waterproof property.

The inorganic dispersion may assume any form such as spherical form, needle form or lamellar form, but has wettability for the polycarboxylic acid type polymer and disperses well in the composition for forming the gas-barrier layer. From the standpoint of blocking water, specifically, the inorganic dispersion is, preferably, a silicate compound having a lamellar crystalline structure, such as water-swelling mica or clay. The inorganic dispersion, desirably, has an aspect ratio of 30 to 5000 from the standpoint of being dispersed in a lamellar form and blocking water.

The inorganic dispersion is contained in an amount of 5 to 100 parts by weight per 100 parts by weight of the total of polycarboxylic acid type polymer and isocyanate compound.

It is desired that the resin composition in the composition for forming the gas-barrier layer contains the polycarboxylic acid type polymer, i.e., contains the free carboxyl groups in an amount of at least not less than 150 KOHmg/g and, specifically, in a range of 250 to 970 KOHmg/g calculated as acid value. Here, the acid value stands for the amount of potassium hydroxide in milligrams that is necessary for neutralizing the free acid functional groups contained in one gram of the resin as found by a customary method based on the neutralization titration with alkali.

It is, further, desired that the isocyanate compound is contained in an amount of 0.04 to 12 parts by weight and, specifically, 0.1 to 7 parts by weight per 100 parts by weight of the polycarboxylic acid polymer.

Though dependent upon the kinds and amounts of the polycarboxylic acid type polymer and isocyanate compound that are used or upon the amount the composition for forming the gas-barrier layer that is applied, the composition for forming the gas-barrier layer is heated at a temperature of 40 to 110°C for one second to one minute (peak-holding time) and is formed into a sheet, a film or a coating thereof. Next, the carboxyl groups in the sheet, film or coating are ionically crosslinked with a polyvalent metal to form the gas-barrier layer.

Though there is no limitation on the ionic crosslinking with a polyvalent metal, the gas-barrier layer is treated with water that contains an alkaline compound of a polyvalent metal or with an alcohol solution that contains an alkaline compound of a polyvalent metal whereby a structure crosslinked with metal ions is easily formed in the gas-barrier layer.

As for the treatment with water containing the alkaline compound of the polyvalent metal, there can be exemplified (i) a dip treatment by dipping the gas-barrier material in water that contains the alkaline compound of the polyvalent metal, (ii) a spray treatment by spraying the gas-barrier material with water that contains the alkaline compound of the polyvalent metal, (iii) an atmospheric treatment by leaving the gas-barrier material in a highly humid environment after the treatments of (i) and (ii), and (iv) a retort treatment with water that contains the alkaline compound of the polyvalent metal (preferably, a method of bringing the wrapping material into direct contact with hot water).

The above treatment (iii) brings about the aging effect after the above treatments (i) and (ii), and enables the treatments (i) and (ii) to be executed in short periods of time. Water used in any of the treatments (i) to (iii) may be cold water. Here, however, water containing the alkaline compound of the polyvalent metal is heated at a temperature of not lower than 20°C and, specifically, at 40 to 100°C so as to easily act on the gas-barrier material. In the case of the treatments (i) and (ii), the time for treatment is not less than 3 seconds and, specifically, about 10 seconds to about 4 days. In the case of the treatment (iii), the treatments (i) and (ii) are executed for not less than 0.5 seconds and, specifically, for about one second to about one hour and, thereafter, the atmospheric treatment is executed by leaving the gas-barrier material in a highly humid environment for not less than one hour and, specifically, for about 2 hours to about 14 days. In the case of the treatment (iv), the temperature for treatment is not lower than 101°C and is, specifically, 120 to 140°C and the treatment is executed for not less than one second and, specifically, for about 3 seconds to about 120 minutes.

In any of these treatments, it is desired that water that contains the alkaline compound of the polyvalent metal is neutral to alkaline.

In the treatment with the alcohol solution containing the alkaline compound of the polyvalent metal, the alcohol solution containing the alkaline compound of the polyvalent metal is applied onto the film, sheet or coating of the above-mentioned composition for forming the gas-barrier layer. The alcohol solution easily infiltrates into the film or the like of the composition for forming the gas-barrier layer. Therefore, the polyvalent metal can be efficiently imbibed in the composition for forming the gas-barrier layer, and the number of the steps or the treating time can be reduced as compared with the treatment with water, offering advantage in productivity.

As the solvent used as the alcohol solvent that contains the alkaline compound of the polyvalent metal, there can be used methanol, ethanol or isopropanol though dependent upon the kind of the alkaline compound of the polyvalent metal that is used.

There is no particular limitation on the polyvalent metal ions so far as they are capable of crosslinking the carboxyl groups of the polycarboxylic acid type polymer. There can be exemplified metal ions such as of alkaline earth metals (magnesium Mg, calcium Ca, strontium Sr, barium Ba, etc.), metals of the Group 8 of periodic table (iron Fe, ruthenium Ru, etc.), metals of the Group 11 of periodic table (copper Cu, etc.), metals of the Group 12 of periodic table (zinc Zn, etc.), and metals of the Group 13 of periodic table (aluminum Al, etc.). It is desired that the polyvalent metal ions have a valence of 2 to 3. There can be desirably used divalent metal ions such as of calcium, magnesium or zinc. Moreover, the metal ions can be used in one kind or in a combination of two or more kinds.

As the alkaline compound of the polyvalent metal, there can be exemplified hydroxides (e.g., magnesium hydroxide, calcium hydroxide, etc.) of the above metal, carbonates (e.g., magnesium carbonate, calcium carbonate, etc.) thereof, and organic acid salts like carboxylates (e.g., acetates such as zinc acetate and calcium acetate, lactates such as zinc lactate, calcium lactate, etc.). It is, however, particularly desired to use at least one of carbonate or hydroxide of calcium or magnesium from the standpoint of safety and that no by-product remains in the gas-barrier material at the time when the metal ionic crosslinking is formed.

If the alkaline compound of the polyvalent metal is contained in water, it is desired that its amount in water is not less than 0.125 mmols/L, preferably, not less than 0.5 mmols/L and, more preferably, not less than 2.5 mmols/L calculated as metal atoms.

Similarly, if the alkaline compound of the polyvalent metal is contained in the alcohol solvent, it is desired that its amount in the solvent is not less than 1 mmol/L, preferably, not less than 10 mmols/L and, more preferably, not less than 30 mmols/L though it may vary depending on the kind of the alkaline compound of the polyvalent metal or the amount of application.

In the gas-barrier material treated with the solvent that contains the alkaline compound of the above polyvalent metal, it is desired that the carboxyl groups of the polycarboxylic acid type polymer are ionically crosslinked with the polyvalent metal ions at a ratio of not less than 20% and, specifically, not less than 30%.

[Gas-barrier material having the undercoating]

The gas-barrier material having the undercoating is the one that has a gas-barrier layer formed on at least one surface of the plastic base material. Between the plastic base material and the gas-barrier layer, there is formed the undercoating that contains the alkaline compound of the polyvalent metal and the isocyanate compound that has at least two isocyanate groups in a molecule thereof.

On the plastic base material, there is formed the undercoating that contains the isocyanate compound and the alkaline compound of the polyvalent metal. A solution containing the polycarboxylic acid type polymer is applied onto the undercoating to thereby form the gas-barrier layer. Therefore, the polyvalent metal ions and the isocyanate compound in the undercoating are fed into the polycarboxylic acid type polymer, and the polyvalent metal element and the nitrogen element are made present in predetermined amounts in the gas-barrier layer. As a result, the polycarboxylic acid type polymer is crosslinked with metal ions, the isocyanate compound fed into the polycarboxylic acid polymer is mostly caused to bleed out to the surface of the gas-barrier layer, chemical bonds derived from the isocyanate compound are made present in the surface of the gas-barrier layer, and the remainder of the isocyanate compound stays near the interface to the undercoating and works chiefly to crosslink the components in the undercoating with the polycarboxylic acid type polymer, or the isocyanate compound reacts by itself. Consequently, like the above-mentioned gas-barrier material, there is obtained a gas-barrier laminate having excellent gas-barrier property, flexibility and waterproof property, as well as excellent waterproof property after the bend working and excellent anti-blocking property.

[Undercoating]

The undercoating comprises a main resin, an isocyanate type curing agent having at least 2 isocyanate groups in a molecule thereof, and an alkaline compound of a polyvalent metal. Here, it is particularly preferred that the main resin is a polyester polyol containing a metal element in the resin skeleton thereof, and the isocyanate type curing agent is a combination of a straight-chain aliphatic isocyanate compound and an alicyclic isocyanate compound having an alicyclic ring structure in the skeleton thereof.

That is, the main resin or the polyester polyol that contains a metal element in the resin skeleton thereof works by itself as an undercoating agent, and enables the undercoating to be laminated on the plastic base material maintaining good adhesiveness. Further, the polyester polyol that contains the metal element swells well in a water-containing solvent. Upon applying a coating material that contains the polycarboxylic acid type polymer, therefore, the polyester polyol swells, and the polyvalent metal ions present in the undercoating migrate effectively into the barrier layer.

As the isocyanate type curing agent, further, there are used in combination a straight-chain aliphatic isocyanate compound and an alicyclic isocyanate compound having an alicyclic ring structure in the skeleton thereof, both of which having different compatibilities with the main resin. This makes it possible to control the bleed-out behavior of the isocyanate compounds in the undercoating.

That is, the straight-chain aliphatic isocyanate compound is highly compatible with the main resin and, therefore, homogeneously disperses in the undercoating. The alicyclic isocyanate compound having the alicyclic ring structure in the skeleton thereof, on the other hand, is poorly compatible with the main resin and, therefore, bleeds out toward the barrier layer side and the base material side in the undercoating. Specifically, the alicyclic isocyanate compound having the alicyclic ring structure in the skeleton thereof is concentrated toward the barrier layer side. As shown in Fig. 3, therefore, a region (x) 12a containing no alkaline compound of polyvalent metal is formed in the undercoating 12, the content of nitrogen in the region (x) 12a being larger than the content of nitrogen in the undercoating 12b which is other than the region (x).

[Main resin]

As the main resin used for forming the undercoating, it is desired to use a non-aqueous resin that contains a metal element in the resin skeleton thereof, such as urethane type, epoxy type, acrylic or polyester type resin. By introducing a metal salt group into the monomer that constitutes these polymers, it is allowed to contain the metal element in the resin skeleton that is formed. Here, the "non-aqueous resin" stands for a concept that excludes emulsion or latex dispersed in a water-containing solvent or that excludes the water-soluble resin. This effectively prevents a decrease in the mechanical strength of the undercoating caused by excess of swelling that occurs at the time of contact with the water-containing solvent.

As for the metal salt group desirably introduced into the monomer of a resin, it is desired that the metal salt group has a polar functional group for improving dispersion property of the polyvalent metal. Examples thereof include metal sulfonate group and metal phosphonate group. As the metal element, further, there can be exemplified lithium Li, potassium K, sodium Na, magnesium Mg, calcium Ca, copper Cu and iron Fe. It is particularly preferred that the metal element is monovalent. In the invention, it is specifically desired that the sodium sulfonate has been introduced.

The gas-barrier material in the invention uses the isocyanate type curing agent to obtain excellent adhesiveness to the base material and to improve dispersion property of the alkaline compound of the polyvalent metal. As the main resin for the isocyanate type curing agent, therefore, it is desired to use a polyester polyol or a polyether polyol, or these polyol components modified with an urethane. An urethane bond is, therefore, thus formed in the undercoating producing excellent adhesiveness to the base material and improving dispersion property of the alkaline compound of the polyvalent metal. Here, if the weight of the isocyanate type curing agent necessary for reacting the hydroxyl groups in the polyol component is presumed to be one equivalent, then it is desired that the isocyanate type curing agent is contained in an amount of at least not less than 4 equivalents.

As the polyol component used for forming the urethane type polymer, there can be preferably used a polyester polyol or the polyester polyol modified with an urethane. As the polyester polyol component, there is used a polyester polyol obtained by reacting a polycarboxylic acid, a dialkyl ester or a mixture thereof with glycols or a mixture thereof.

The polyester polyol has a glass transition temperature of, preferably, -50°C to 100°C and, more preferably, -20°C to 80°C, and has a number average molecular weight of, preferably, 1,000 to 100,000 and, more preferably, 3,000 to 80,000.

As the polycarboxylic acid, there can be exemplified aromatic polycarboxylic acids such as isophthalic acid, terephthalic acid and naphthalenedicarboxlic acid as well as aliphatic polycarboxylic acids such as adipic acid, azelaic acid, sebacic acid and cyclohexanedicarboxylic acid.

As the glycol, there can be exemplified ethylene glycol, propylene glycol, diethylene glycol, butylene glycol, neopentyl glycol and 1,6-hexanediol.

In the invention, the above polyol component or the polycarboxylic acid component is copolymerized with a component to which a metal base group is introduced to thereby obtain a non-aqueous resin having a metal element in the resin skeleton thereof.

As the polycarboxylic acid to which the metal salt group is introduced, there can be exemplified metal salts such as sulfoterephthalic acid, 5-sulfoisophthalic acid, 4-sulfonaphthalene-2,7-dicarboxylic acid and 5[4-sulfophenoxy] isophthalic acid. As the polyol to which the metal base group is introduced, there can be exemplified metal salts such as 2-sulfo-1,4-butanediol and 2,5-dimethyl-3-sulfo-2,5-hexanediol. Particularly preferred is the 5-sodium sulfoisophthalate.

The component to which the metal salt group has been introduced is copolymerized in an amount of, desirably, 0.01 to 10 mol%. If the above amount is smaller than the above range, migration of the polyvalent metal ions cannot be accelerated to a sufficient degree. If the above amount is larger than the above range, on the other hand, the waterproof property becomes poor.

Whether the metal element has been contained in the resin skeleton of the non-aqueous resin can be detected by, for example, the X-ray fluorometric analysis of the starting resin. (Measuring condition of the X-ray fluorometric analyzer) Equipment used: ZSX100e manufactured by Rigaku Denki Co. Measuring conditions: Object to be measured, Na-K$\alpha$ ray

Measuring diameter, 30 mm
X-ray output, 50 kV - 70 mA
Measuring time, 40 sec.

[Isocyanate type curing agent]

As the isocyanate type curing agent used for the undercoating, there are used, as described above, the straight-chain aliphatic isocyanate compound and the alicyclic isocyanate compound having an alicyclic ring structure in the skeleton thereof in combination.

It is, further, desired that the straight-chain aliphatic isocyanate compound and the alicyclic isocyanate compound are added at a weight ratio of 60:40 to 15:85 and, specifically, 55:45 to 30:70. If the amount of the straight-chain aliphatic isocyanate compound is smaller than the above range, the adhesiveness is not obtained to a sufficient degree. If the amount of the alicyclic isocyanate compound is smaller than the above range, on the other hand, it may become difficult to form the region (x).

As the straight-chain aliphatic isocyanate, there can be exemplified tetramethylenediisocyanate, 1,6-hexamethylenediisocyanate, dodecamethylenediisocyanate and trimethylhexamethylenediisocyanate. Among them, it is desired to use those having an isocyanurate structure. Concretely, it is desired to use an isocyanurate isomer having the 1,6-hexamethylenediisocyanate as a structural unit.

As the alicyclic isocyanate compound having an alicyclic ring structure in the skeleton thereof, there can be exemplified 1,3-cyclohexylenediisocyanate, 4-cyclohexylenediisocyanate, hydrogenated xylylenediisocyanate, lysinediisocyanate, isophoronediisocyanate, 4,4'-dicyclohexylmethanediisocyanate, and 3,3'-dimethyl-4,4'-dicyclohexylmethanediisocyanate. Among them, there can be favorably used isophoronediisocyanate and derivatives thereof.

As the straight-chain aliphatic polyisocyanate compound and the alicyclic isocyanate compound, further, there can be also used a polyfunctional polyisocyanate compound such as isocyanurate, biuret and allophanate, or a terminal isocyanate group-containing polyfunctional polyisocyanate compound obtained by the reaction with a trifunctional or more highly functional polyol compound such as trimethylolpropane or glycerin.

In the undercoating, the straight-chain aliphatic isocyanate compound tends to be easily and homogeneously dispersed at the time when the solvent volatilizes. It is, therefore, desired that the straight-chain aliphatic isocyanate compound has a glass transition temperature (Tg) of not higher than -20°C and a number average molecular weight (Mn) of not more than 1200 and, specifically, a glass transition temperature (Tg) of not higher than -40°C and a number average molecular weight (Mn) of not more than 1100. Further, the alicyclic isocyanate compound stays in the undercoating on the side of the barrier layer or on the side of the plastic base material so that the region (x) is easily formed. It is, therefore, desired that the alicyclic isocyanate compound has a glass transition temperature (Tg) of not lower than 50°C and a number average molecular weight (Mn) of not less than 400 and, specifically, a glass transition temperature (Tg) of not lower than 60°C and a number average molecular weight (Mn) of not less than 500.

[Alkaline compound of a polyvalent metal]

As the alkaline compound of the polyvalent metal to be contained in the undercoating, there can be used those mentioned above. It is, however, desired to use the granular alkaline compound of the polyvalent metal of which the surfaces have not been chemically treated from such a standpoint that the alkaline compound of the polyvalent metal migrates into the gas-barrier layer of the polycarboxylic acid type polymer and dissolves therein quickly.

The granular alkaline compound of the polyvalent metal may often remain in the portions other than the region (x) in the undercoating. In this case, if the primary particle size of the particles exceeds 0.5 $\mu$m, transparency of the coating (undercoating and gas-barrier layer) of the gas-barrier material may often decrease to some extent though also dependent upon the amount of the particles that remain. It is, therefore, desired that the granular alkali metal particles of the polyvalent metal has a primary particle size of not more than 0.5 $\mu$m and, specifically, not more than 0.4 $\mu$m. The primary particle size of the granular alkaline compound of the polyvalent metal can be found by observing a secondary electron ray image thereof by using a scanning type electron microscope.

In the invention, presuming that two carboxyl groups react with one polyvalent metal ion, it is desired that the composition that forms the undercoating (hereinafter "undercoating-forming composition") contains the alkaline compound of the polyvalent metal in an amount, calculated as metal atoms, of not less than 0.3 equivalents with respect to the carboxyl groups of the polycarboxylic acid type polymer present in the composition that forms the gas-barrier layer (hereinafter "gas-barrier layer-forming composition"). Specifically, for the use under high temperature and highly humid conditions, it is desired that the undercoating-forming composition contains the alkaline compound of the polyvalent metal in an amount, calculated as metal atoms, of not less than 0.6 equivalents with respect to the carboxyl groups of the polycarboxylic acid type polymer present in the gas-barrier layer-forming composition from the standpoint of maintaining gas-barrier property under high temperature and highly humid conditions. If the content of the alkaline compound of the polyvalent metal is smaller than the above range, the polycarboxylic acid type polymer cannot be crosslinked to a sufficient degree and it becomes difficult to maintain the gas-barrier property.

In the undercoating after the polyvalent metal ions have been fed to the polycarboxylic acid type polymer, it is desired that the granular alkaline compound of the polyvalent metal remains little therein. This makes it possible to lower the risk of generating by-products and to maintain over extended periods of time the heat insulating ability of the sheath of the vacuum heat insulating material. Concretely speaking, it is desired that the remaining amount (equivalent) which is a difference between the amount (equivalent) of the alkaline compound of the polyvalent metal that is fed and the amount (equivalent) thereof used for the crosslinking is not more than 1.1 and, specifically, not more than 0.3.

It is desired that the content of the resin component in the undercoating-forming composition is adjusted to be 15 to 80% by weight and, specifically, 20 to 60% by weight.

In the undercoating-forming composition, further, it is desired that the resin component is of the non-aqueous type and can be prepared by using a solvent such as toluene, 2-butanone, cyclohexanone, solvesso, isophorone, xylene, ethyl acetate or butyl acetate. It is, however, specifically desired to use a low boiling solvent so that the layer can be formed at a low temperature. These solvents may be dissolved in a single solution or in a mixed solution, or the solutions of the components may be mixed together.

In addition to the above components, it is also allowable to use known curing acceleration catalyst, filler, softening agent, anti-aging agent, stabilizer, adhesion accelerator, leveling agent, defoaming agent, plasticizer, inorganic filler, tackifying resin, fibers, coloring agents such as pigments, and usable time extender.

As the gas-barrier layer-forming composition to be applied onto the undercoating, there can be used the same composition as the gas-barrier layer-forming composition used in the gas-barrier material that contains no isocyanate compound and that has no undercoating, either.

In the gas-barrier layer-forming composition, it is essential that the solvent contains water such that the alkaline compound of the polyvalent metal dissolves therein and migrates into the gas-barrier layer-forming composition. It is, further, desired that the solvent having good affinity to the undercoating is mixed with the water in order to improve affinity to the undercoating and to accelerate the migration of the alkaline compound of the polyvalent metal into the gas-barrier layer-forming composition. The solvent having good affinity to the undercoating may differ depending on the resin component used for the undercoating-forming composition. If, for example, an urethane type polymer is used, then there can be preferably used an alcohol such as methanol, ethanol or isopropanol, or a ketone such as 2-butanone or acetone.

From the standpoint of controlling the amount of migration of the isocyanate compound into the gas-barrier layer-forming composition, further, it is desired that another solvent is used in an amount of not more than 1900 parts by weight and, specifically, 5 to 900 parts by weight and, more desirably, 10 to 400 parts by weight per 100 parts by weight of water.

[Plastic base material]

In the invention, as the plastic base material for forming the gas-barrier layer or the undercoating, there can be exemplified a film or a sheet comprising a thermoplastic resin that can be thermally formed and, specifically, the film or the sheet on which a layer is vapor-deposited. As a method of producing the film or the sheet, there can be exemplified a known forming method such as T-die method, inflation film-forming method and cast film-forming method.

The film or the sheet is biaxially stretched at a stretching temperature successively or simultaneously. The film or the sheet after stretched is thermally set to use it as a biaxially stretched film or sheet.

The film or the sheet has a thickness in a range of, desirably, 5 to 3,000 $\mu$m though not limited thereto only.

Suitable examples of the resin that constitutes the plastic base material are olefin copolymers such as low-, intermediate- or high-density polyethylene, straight-chain low-density polyethylene, polypropylene, ethylene-propylene copolymer, ethylene-butene copolymer, ionomer, ethylene-vinyl acetate copolymer and ethylene-vinyl alcohol copolymer; polyesters such as polyethylene terephthalate, polybutylene terephthalate, polyethylene terephthalate/isophthalate and polyethylene naphthalate; polyamides such as nylon 6, nylon 6, 6, nylon 6,10, and metaxyleneadipamide; styrene copolymers such as polystyrene, styrene-butadiene block copolymer, styrene-acrylonitrile copolymer and styrene-butadiene-acrylonitrile copolymer (ABS resin); vinyl chloride copolymers such as polyvinyl chloride and polyvinyl-vinyl acetate copolymer; acrylic copolymers such as polymethyl methacrylate and methyl methacrylate-ethyl acrylate copolymer; and polycarbonate.

The thermoplastic resins may be used in a single kind or as a blend of two or more kinds. Further, the plastic base material may be of a single layer constitution or a laminated layer constitution of two or more layers formed by the simultaneous melt extrusion or any other lamination method.

As required, the melt-formable thermoplastic resin can be added with one or two or more kinds of additives such as pigment, antioxidant, antistatic agent, ultraviolet ray absorber and lubricant in a total amount in a range of 0.001 to 5.0 parts per 100 parts by weight of the resins.

In order to reinforce the gas-barrier material, further, the melt-formable thermoplastic resin may be blended with one or two or more kinds of fibrous reinforcing materials such as glass fiber, aromatic polyamide fiber, carbon fiber, pulp, or cotton-linter; powdery reinforcing materials such as carbon black and white carbon; flaky reinforcing materials such as glass flakes and aluminum flakes in a total amount of 2 to 150 parts by weight per 100 parts by weight of the thermoplastic resin, and may be, further, blended as fillers with one or two or more kinds of heavy or soft calcium carboxylate, mica, talc, clay, kaolin, gypsum, barium sulfate, alumina powder, silica powder and magnesium carboxylate in a total amount of 5 to 100 parts by weight per 100 parts by weight of the thermoplastic resin according to a recipe known per se.

In order to further improve the gas-barrier property, there may be added scale-like inorganic fine powder, such as water-swelling mica or clay in a total amount of 5 to 100 parts by weight per 100 parts by weight of the thermoplastic resin according to a recipe known per se.

It is specifically desired that the sheath of the vacuum heat insulating material of the invention uses a plastic base material on which an inorganic layer such as of silicon oxide or aluminum oxide is deposited by a physical or chemical vapor phase deposition method or on which a metallic layer such as of aluminum is vapor-deposited in order to improve at least either the gas-barrier property or the ability (reflection factor) for shutting off the radiant heat.

The vapor-deposited layer may be formed on at least one surface of the plastic base material. Further, the gas-barrier layer or the undercoating may be formed on the surface of either the vapor-deposited layer or the plastic base material. Here, however, the gas-barrier layer has excellent crack resistance. It is, therefore, desired that the gas-barrier layer is formed on the vapor-deposited layer making it possible to prevent the vapor-deposited layer from cracking.

To obtain the gas-barrier material that includes the undercoating, first, the above-mentioned undercoating-forming composition is applied on at least one surface of the plastic base material.

The amount the undercoating-forming composition is applied cannot be exclusively specified but is determined depending on the amounts of the resin component and the alkaline compound of the polyvalent metal in the undercoating-forming resin. It is, however, desired that the undercoating-forming composition is applied in such an amount that the layer that is formed contains the resin component in an amount in a range of 0.02 to 5.0 g/m$^2$ and, specifically, 0.1 to 2.5 g/m$^2$ and that the amount of the polyvalent metal ions is not less than 0.3 equivalents with respect to the carboxyl groups of the polycarboxylic acid type polymer in the gas-barrier layer-forming composition solution that is applied. If the amount of the resin component is smaller than the above range, it becomes difficult to adhere the undercoating onto the plastic base material. Even if the amount of the resin component is larger than the above range, on the other hand, there is obtained no particular advantage but disadvantage in economy.

Further, though dependent upon the kind of the coating material that is used and the amount of coating, the undercoating-forming resin composition applied onto the plastic base material is dried at a temperature of 50 to 200°C for 0.5 seconds to 5 minutes and, specifically, at a temperature of 60 to 140°C for one second to 2 minutes to thereby form the undercoating. The undercoating is thus economically formed without affecting the plastic base material.

Next, the gas-barrier layer-forming composition is applied onto the undercoating that is formed. It is desired that the amount of the polycarboxylic acid type polymer contained in the gas-barrier layer-forming composition, i.e., the amount of the free carboxyl group is at least not less than 150 KOHmg/g and, specifically, in a range of 250 to 970 KOHmg/g in terms of an acid value.

It is desired that the gas-barrier layer-forming composition is applied in such an amount that the amount of the resin component only is 0.3 to 4.5 $g/m^2$ and, specifically, 0.5 to 3.0 $g/m^2$ in a dry state of before the ionic crosslinking is formed in the gas-barrier layer. If the amount of application thereof is smaller than the above range, the gas-barrier property is not obtained to a sufficient degree. Even if the amount of the resin component is larger than the above range, on the other hand, there is obtained no particular advantage but disadvantage in economy.

Next, the gas-barrier layer-forming composition that is applied is heat-treated. During the heat treatment, the polyvalent metal ions and the isocyanate compound in the undercoating migrate into the gas-barrier layer-forming composition, the metal ionically crosslinked structure is formed between the carboxyl groups in the polycarboxylic acid type polymer, and the nitrogen element derived from the isocyanate compound is made present near the interface between the surface layer of the gas-barrier layer and the undercoating. In particular, most of the isocyanate compound that has migrated into the gas-barrier layer-forming composition bleeds out on the surface layer of the gas-barrier layer and forms a chemical bond derived from the isocyanate compound in the surface of the gas-barrier layer.

The gas-barrier layer-forming composition is heated under the conditions of, preferably, a temperature of 40 to 110°C and, specifically, 50 to 100°C for one second to one minute and, more preferably, 2 seconds to 30 seconds.

It is desired that the gas-barrier layer is dried to a sufficient degree so as to decrease the water content therein. This makes it possible to suppress the generation of water vapor and maintain the heat insulating ability of the sheath of the vacuum heat insulating material over extended periods of time.

The undercoating-forming composition and the gas-barrier layer-forming composition are applied and are dried or heat-treated in a customary manner.

The application method is, for example, though not limited thereto only, a spray coating method, a dipping method or by using a bar coater, a roll coater or a gravure coater.

The drying or the heat treatment is conducted based on, for example, oven drying (heating), infrared ray heating or high-frequency heating.

(Sheath)

It is an important feature that the sheath used for the vacuum heat insulating material of the invention uses a gas-barrier laminate that includes the above-mentioned gas-barrier material. So far as the gas-barrier material is used as part of the sheath, the other layers of the gas-barrier laminate may be constituted in the same manner as those of the conventional sheath. In the present invention, however, it is desired to employ the layer constitution that is described below.

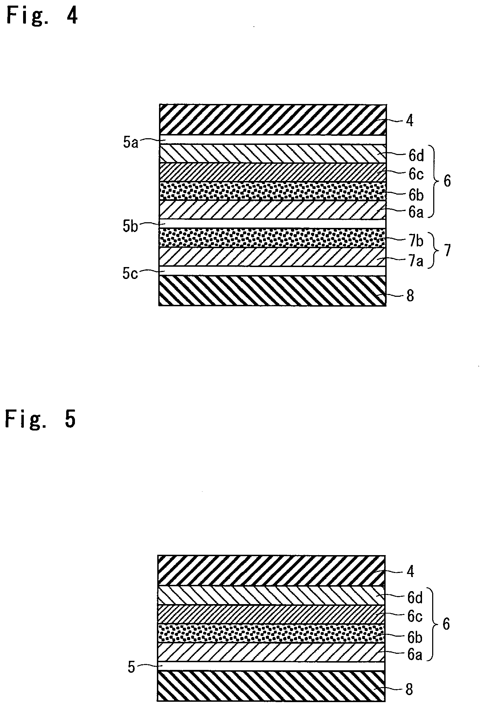

Fig. 4 is a view illustrating a sectional structure of a gas-barrier laminate that is preferably used as the sheath of the vacuum heat insulating material of the present invention. The gas-barrier laminate has a laminated layer structure that includes, successively from the inner surface side, a heat-melt-adhesion layer 4, an adhesive layer 5a, a gas-barrier material 6, an adhesive layer 5b, a vapor-deposited film 7 forming a vapor-deposited layer 7b on a base resin 7a, an adhesive layer 5c and a protection layer 8.

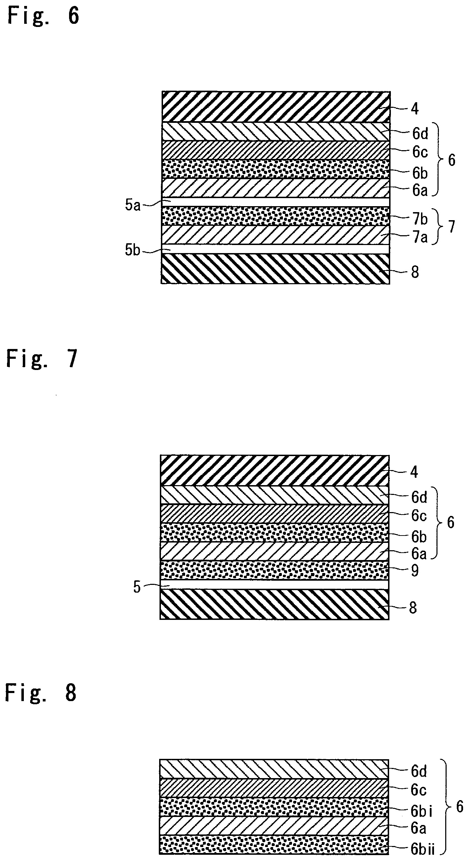

As shown in Figs. 5 and 6, further, from the standpoint of reducing the thickness and improving the productivity, there may be employed a laminated layer structure (Fig. 5) omitting the vapor-deposited film 7 and the accompanying adhesive layer 5b, or a laminated layer structure (Fig. 6) having no adhesive layer 5a but in which the heat-melt-adhesion layer 4 is directly formed by being extruded onto the gas-barrier layer 6d.

As shown in Fig. 7, further, there may be employed a laminated layer structure by forming another vapor-deposited layer 9 on the gas-barrier material 6 on the side on where the heat-melt-adhesion layer 4 has not been formed.

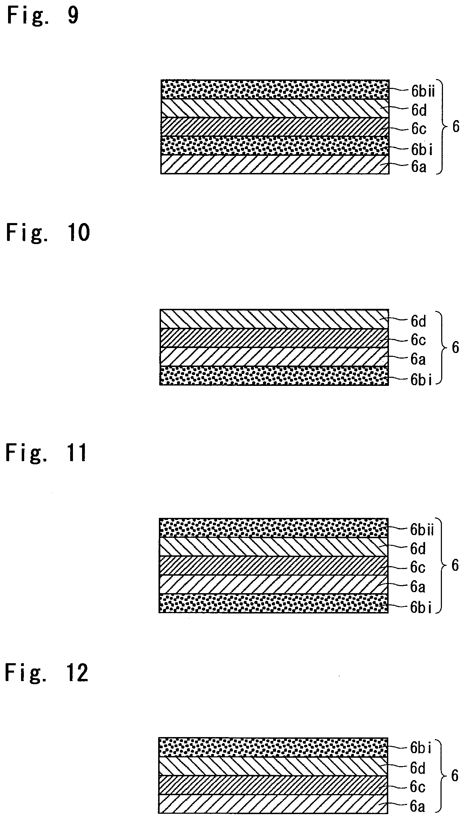

In the gas-barrier materials 6 shown in Figs. 4 to 7, the gas-barrier layer 6d is formed, via an undercoating 6c, on a base material that comprises a PET film 6a and a vapor-deposited film which is a vapor-deposited aluminum layer 6b formed on the PET film 6a in this order from the outer surface side. Not being limited thereto only, however, the gas-barrier materials 6 shown in Figs. 4 to 7 may have a laminated layer structure as shown in Fig. 8 in which a layer 6bii is also vapor-deposited on the side of the base material resin 6a, may have a laminated layer structure as shown in Fig. 9 in which a layer 6bii is also vapor-deposited on the gas-barrier layer 6d, may have a laminated layer structure as shown in Fig. 10 in which a gas-barrier layer 6d is formed on the vapor-deposited film on the side of the base material resin 6a via the undercoating 6c, may have a laminated layer structure as shown in Fig. 11 in which a layer 6bii is also vapor-deposited on the gas-barrier layer 6d, or in case there is used a base material resin having no layer that is vapor-deposited, may have a laminated layer structure as shown in Fig. 12 in which a layer 6bi is vapor-deposited on the gas-barrier layer 6d. Or the gas-barrier material may be the one having simply the gas-barrier layer formed on the base material via the undercoating. Desirably, however, the base material comprises a film having a vapor-deposited layer from the standpoint of further improving the barrier property of the sheath.

Specifically, the gas-barrier laminate that has two vapor-deposited layers helps improve the gas-barrier property of the sheath and its ability (reflection factor) for shutting off the radiant heat, and, further, expresses particularly excellent gas-barrier property compounded by the presence of the gas-barrier layer that has excellent flexibility.

In the invention, the gas-barrier material, desirably, has such a laminated layer constitution that either the gas-barrier layer or the undercoating is adjoining the vapor-deposited layer. That is, under high-temperature conditions, the barrier property of the gas-barrier layer may decrease due to molecular oscillation. Upon being brought to be adjacent to the vapor-deposited layer, however, the molecular oscillation of the gas-barrier layer is suppressed, oxygen dissolves less in the gas-barrier layer, and the gas-barrier property is maintained even under high-temperature conditions.

Preferred examples of the laminated layer constitution include the ones (Figs. 9 and 11) in which the gas-barrier material has two vapor-deposited layers, and has the gas-barrier layer and the undercoating formed between these two vapor-deposited layers. Particularly preferred example is the one (Fig. 9) in which both the gas-barrier layer and the undercoating are adjoining the vapor-deposited layers.

In the invention, the thermoplastic resin melt-kneaded in an extruder is extruded through a T-die or an annular die onto the gas-barrier material to thereby obtain the gas-barrier material on which a layer is heat-melt-adhered. Here, at the time of extruding the thermoplastic resin as the heat-melt-adhesion layer, it is also allowable to extrude and laminate together the adhesive layer and the heat-melt-adhesion layer at the same time.

Further, the thermoplastic resin that becomes the heat-melt-adhesion layer may be extruded onto the gas-barrier layer of the gas-barrier material, and another layer comprising the thermoplastic resin may be formed on the other surface of the gas-barrier material. For example, a sandwich lamination method may be employed. In this method, a plastic material to form a protective layer is laminated on the other surface of the gas-barrier material via an adhesive resin. In another method, a thermoplastic material to form a protective layer may be extruded to be coated on the other surface of the gas-barrier material. There can be thus produced the gas-barrier laminate shown in Fig. 5 without passing through the step of dry lamination.

Here, as required, the gas-barrier material or the base material on the extrusion line can be subjected to the corona discharge treatment, plasma treatment, ozone treatment for the molten thermoplastic resin film or to the application of anchor coating on the base material.

It is, further, allowable to execute the coextrusion lamination for simultaneously laminating different kinds of thermoplastic resins or an extrusion lamination a plurality of times by using tandem extruders on the same line.

As the resin that constitutes the heat-melt-adhesion layer as the innermost layer of the gas-barrier laminate, there can be used a known heat-sealable resin. Not being limited thereto only, however, there can be further preferably used olefin resins such as low-, intermediate- or high-density polyethylene, linear low-density polyethylene, polypropylene and ethylene-propylene copolymer; polyester resins such as polyethylene terephthalate and the like; and acrylic resins such as polyacrylonitrile and the like. From the standpoint of melt-adhering property, however, it is desired to form an unstretched film. The most desired heat-melt-adhesion layer is an unstretched polypropylene film.

If the thermoplastic resin is to be extruded and applied as the heat-melt-adhesion layer, it is specifically desired to use an ethylene-(meth)acrylic acid copolymer or an ionomer resin that forms a hydrogen bond with the gas-barrier layer from the standpoint of adhesiveness based on the extrusion-application.

From the standpoint of adhesiveness, similarly, there can be also preferably used an olefin resin to which no antioxidant is added, an olefin resin polymerized by using a single-site catalyst, and an olefin resin containing a reaction group such as epoxy group that is capable of forming a chemical bond with a polar group such as carboxyl group or hydroxyl group on the surface of the base material or the gas-barrier layer. These resins do not permit the strength of adhesion to decrease even under highly humid conditions as compared to the above-mentioned ethylene-(meth)acrylic acid copolymer or the ionomer resin, and are suited particularly for the use where waterproof property is required.

Here, the addition of no antioxidant stands for a state where the amount of the antioxidant contained in the resin is not more than 10 ppm. At the time of melt-extrusion, oxidation of the resin is accelerated. Therefore, polar groups increase in the resin and cohesive force increases with the base material or the gas-barrier material. In the latter case of the olefin resin having reaction groups, not only the chemical reaction is conducted by using the heat at the time of melt-extrusion but also the reaction is accelerated due to the aging while being stored after the extrusion-lamination and due to the heat treatment (curing) in the oven or in the constant-temperature vessel enabling the adhesiveness to increase.

As the olefin resin polymerized by using the single-site catalyst, there can be exemplified a straight-chain low-density polyethylene that is polymerized by using a single-site catalyst such as metallocene catalyst having a small molecular weight profile and a low density. Such an olefin resin is little crystalized when it is cooled after extruded, has little strain caused by the crystallization, and is advantageous from the standpoint of, specifically, anchoring effect.

Among the above olefin resins, preferred are the olefin resins having densities (as measured in compliance with the JIS-K6922-1 at 23°C) of not more than 0.950 g/cm$^3$ and, specifically, the olefin resins having densities of not more than 0.920 g/cm$^3$ from the standpoint of anchoring effect. From the standpoint of extrusion workability, further, it is desired that the olefin resin has a melt flow rate (MFR: as measured in compliance with the JIS-K6922-1 under the conditions of 190°C and a load of 2.16 kg) of not less than 0.1 g/10 min. and, specifically, an MFR of not less than 7.0 g/10 min. from the standpoint of easily infiltrating in a molten state into the base material and the gas-barrier layer and exhibiting excellent adhesiveness.

It is, further, desired that the thermoplastic resin adheres to the gas-barrier layer to a sufficient degree, and is flexible enough. In this case, even if the laminate receives stress such as bending force or tensile force, the laminate is capable of relaxing the stress to a high degree, suppressing the occurrence of cracks in the gas-barrier layer and offering advantage in regard to exhibiting oxygen- and nitrogen-barrier property maintaining stability.

As the adhesive layer formed, as required, among the heat-melt-adhesion layer, gas-barrier material, vapor-deposited film and the protection layer, there can be used a known adhesive resin. Though not limited thereto only, in case the layers are laminated by the sandwich lamination based on the extrusion-lamination, there can be used the resins mentioned above concerning the heat-melt-adhesion layer, there can be exemplified acid-modified olefin resins such as acid-modified ethylene-acrylic acid copolymer, acid-modified ethylene-ethyl acrylate copolymer and acid-modified polyethylene. In case the layers are laminated by the dry lamination using the adhesive, there can be favorably used an urethane type adhesive. Further, the above-mentioned resins can also be favorably used even in case the heat-melt-adhesion layer and the adhesive layer are to be coextruded and applied.

As the resin that constitutes the protection layer as the outermost layer of the gas-barrier laminate and improves the mechanical strength, waterproof property and weatherproof property of the sheath, though not limited thereto only, there can be used polyamide resins such as nylon 6, nylon 6,6, nylon 6,10 and metaxylyleneadipamide; polyester resins such as polyethylene terephthalate, polybutylene terephthalate, polyethylene terephthalate/isophthalate, and polyethylene naphthalate; and olefin resins such as ethylene-ethylene tetrafluoride copolymer resin, polypropylene and polyethylene. Specifically, there can be formed a biaxially stretched film from the standpoint of mechanical strength and resistance against piercing of the sheath. The most desired protection layer will be a biaxially stretched nylon film.

The vapor-deposited film can be formed by depositing an inorganic substance such as silicon oxide, aluminum oxide, a mixture of silica and alumina or diamond-like carbon, or depositing a metal such as aluminum on the base material film comprising the above-mentioned polyester, polyolefin or polyamide, though not limited thereto only. Here, as will be described later, the layer can also be vapor-deposited directly on the gas-barrier material.

There is no particular limitation on the thicknesses of the heat-melt-adhesion layer, vapor-deposited film and protection layer of the gas-barrier laminate used as the sheath of the present invention, and the thicknesses may lie over the ranges adapted so far for the sheaths of the vacuum heat insulating materials. Concretely, however, it is desired that the heat-melt-adhesion layer has a thickness in a range of 20 to 100 $\mu$m, the vapor-deposited layer has a thickness in a range of 100 to 20, 000 Å, the base material forming the vapor-deposited layer has a thickness in a range of 5 to 100 $\mu$m, and the protection layer has a thickness in a range of 5 to 100 $\mu$m.

The gas-barrier laminate used as the sheath of the vacuum heat insulating material of the present invention can be produced by a conventional lamination method. Here, however, the thermoplastic material can be directly extruded and applied onto the gas-barrier material that is used in the invention to produce a laminated film. Therefore, the laminated film can be produced by the sandwich lamination based on the extrusion-application instead of the dry lamination using the adhesive.

That is, the gas-barrier material has resistance against the thermal decomposition so will not to be thermally decomposed over a range of working temperatures at which the laminate is heated, and has portions that are not crosslinked in the range of the working temperatures. Namely, the gas-barrier material sustains predetermined molecular motion due to heat energy and relaxes the stress built up in the gas-barrier layer. This secures crack resistance, enables the thermoplastic resin to be extrusion-applied directly onto the gas-barrier material and, therefore, makes it possible to efficiently produce the gas-barrier laminate.

According to the present invention, therefore, the laminated film obtained by extrusion-laminating the thermoplastic resin that forms the heat-melt-adhesion layer on the gas-barrier material, may be laminated, according to the conventional lamination method such as dry lamination, on the vapor-deposited film obtained by laminating the thermoplastic resin that forms the protection layer by the extrusion lamination or by the lamination using the adhesive. Or another layer may be vapor-deposited on the gas-barrier layer of the laminated film that comprises the gas-barrier material and the heat-melt-adhesion layer, and the thermoplastic resin that forms the protection layer may be laminated on the laminated film forming the vapor-deposited layer by the extrusion lamination or by the lamination using the adhesive to thereby produce the gas-barrier laminate.

(Method of producing the vacuum heat insulating material)

The method of producing the vacuum heat insulating material of the present invention is the same as that of producing the conventional vacuum heat insulating materials. Namely, the core material is covered with the above-mentioned sheath, the melt-heat-adhesion layers of the sheath are overlapped one upon the other, the pressure is reduced in a vacuum chamber and after a predetermined internal pressure is reached, the heat-melt-adhesion layers are heated and melted to seal the sheath.

As the core material, though not limited thereto only, there can be used fibers such as glass wool, glass fiber, alumina fiber, silica alumina fiber, silica fiber, rock wool, and silicon carbide fiber; and powders such as of silica, perlite, and carbon black.

EXAMPLES

The invention will now be further described by way of the following Examples to which only, however, the invention is in no way limited. In Examples and Comparative Examples, measurements and evaluation were taken by the methods described below. Tables 1, 4 and 9 show the compositions of the undercoatings and the gas-barrier layers in Examples and Tables 2, 5 and 10 show the layer constitutions of the sheaths in Examples.

Contents of a monovalent metal element, polyvalent metal element and nitrogen element in the gas-barrier layer were measured by a method described below.

(Contents of the monovalent metal element and polyvalent metal element)

The gas-barrier material comprising the polycarboxylic acid type polymer was dipped in an alkaline solution and was dissolved therein. The alkaline solution was vaporized and the dried solid material that was obtained was incinerated in an oven. The resulting ash was analyzed by using an ICP emission spectrometer (iCAP6000 manufactured by Thermofisher Scientific Co.) to analyze the weight ratio of the monovalent metal element and the polyvalent metal element in the gas-barrier material.

(Content of the nitrogen element)

The gas-barrier material comprising the polycarboxylic acid type polymer was dipped in an alkaline solution and was dissolved therein. The alkaline solution was vaporized and the dried solid material that was obtained was analyzed by the combustion method by using an organic element analyzer (Thermoquest EA1110 manufactured by CE Instruments Ltd.) to measure the weight ratio of nitrogen relative to the total weight of nitrogen and oxygen.

(Content of the nitrogen element in the surface layer of the gas-barrier layer)

The surface layers of the gas-barrier layers in Examples were analyzed by using a XPS (Quantum-2000 manufactured by Ulvac-Phi, Inc.) to measure the content of nitrogen relative to the total amount of carbon, oxygen and nitrogen in the surface layer.

(Contents of nitrogen in the undercoating and in the region (x))

Based on the method described below, contents of nitrogen relative to the total amount of carbon, oxygen and nitrogen were measured in each of the regions

Region (x): The gas-barrier materials described in Examples were dipped in an alkaline aqueous solution so that the gas-barrier layers were dissolved therein. Thereafter, the exposed surfaces were analyzed for their compositions by using the XPS.
Undercoating: The gas-barrier materials described in Examples were cut aslant, and the cut regions were analyzed for their compositions by using the XPS.

(Ionically crosslinking ratio)

The ionically crosslinking ratios were calculated by measuring the gas-barrier layers described in Examples after having been ionically crosslinked by using the Fourier transform infrared ray spectrophotometer. Due to the formation of ionic crosslinking, the carboxylic acid converts into a carboxylate. Usually, the carboxylic acid has characteristic absorption bands in the wavelengths near 920 to 970 $cm^{-1}$, near 1700 to 1710 $cm^{-1}$ and near 2500 to 3200 $cm^{-1}$ while an acid anhydride has it in the wavelengths near 1770 to 1800 $cm^{-1}$. The carboxylate has a characteristic absorption band in the wavelengths near 1480 to 1630 $cm^{-1}$. The ionically crosslinking ratio is calculated by using the peak heights of the carboxylic acid and the acid anhydride thereof in the wavelength region of 1600 to 1800 $cm^{-1}$ and by using the peak height of the carboxylate in the wavelength region of 1480 to 1630 $cm^{-1}$. More preferably, there are used the peak heights in the wavelength regions of 1695 to 1715 $cm^{-1}$ (i) and 1540 to 1610 $cm^{-1}$ (ii). The samples are detected for their infrared absorption spectra and are measured for their absorbencies over the wavelengths (i) and (ii) to obtain their peak heights. Presuming that the carboxylic acid and the carboxylate thereof have the same absorbency factors, the conversion ratio of the carboxyl group into a salt thereof (when the carboxylic acid is converted into the carboxylate) is calculated, i.e., the ionic crosslinking ratio X is calculated from the following formula (1).

Further, the equivalent Y of the alkaline compound of the polyvalent metal used for the ionic crosslinking is calculated from the following formula (2).

$$X = \text{peak height in (ii)}/[\text{peak height in (i)} + \text{peak height in (ii)}] \qquad --- (1)$$

$$Y = X/100 \qquad --- (2)$$

The peak heights in (i) and (ii) stand for differences in the absorbency between the peak points and the points where the hems of the peaks overlap the base line.

(Measuring conditions for the Fourier transform infrared ray spectrophotometer)

Equipment used: FTS 7000 Series manufactured by Digilab Co.
Measuring method: single reflection method using a germanium prism.
Wavelength region being measured: 4000 to 700 $cm^{-1}$

(Thermogravimetric analysis)

The gas-barrier layer is formed and is, thereafter, removed from the plastic base material or from the undercoating. The gas-barrier layer is then thermogravimetrically analyzed (TGA) (TG/DTA7220 manufactured by Hitachi High-Tech Science Co.) to calculate the loss of weight from 200°C to 320°C.

Rate of elevating the temperature: 10°C/min.
Measuring temperature: 20°C to 900°C

$$\text{Weight loss \% from } 200℃ \text{ to } 320℃ = (\text{weight of sample at } 200℃ - \text{weight of sample at } 320℃)/\text{weight of sample at the start} \times 100$$

(Measuring the dynamic viscoelasticity)

By using an environmentally controlled nano-indentater (composite equipment of Tribo Scope manufactured by Hysitron Co. and E-sweep manufactured by SII Nanotechnology Co.), the gas-barrier layer was measured for its dynamic viscoelasticity (DMS), and a difference was calculated by subtracting tan $\delta$ at 50°C from tan $\delta$ at 200°C.

Indentater used: Spherical indentater
Measuring atmosphere: Vacuum ($10^{-3}$ Pa or lower)
Measuring temperature: 23 to 300°C
Measuring frequency: 20 Hz

The sheaths were measured and evaluated by the methods described below.

(Amount of oxygen permeation)

The sheaths described in Examples were measured by using an oxygen permeation amount measuring instrument (OX-TRAN 2/20 manufactured by Modern Control Co.). The measuring conditions consisted of a temperature of 80°C and a relative humidity of 0%.

(Amount of nitrogen permeation)

The sheaths described in Examples were measured in compliance with the gas permeation testing method A (differential pressure method) specified under the JIS K7126. The measuring conditions consisted of a temperature of 80°C and a relative humidity of 0%.

(Amount of water vapor permeation)

The sheaths described in Examples were measured by using a water vapor permeation amount measuring instrument (PERMATRAN-W 3/30 manufactured by Modern Control Co.). The measuring conditions consisted of a temperature of 40°C and a relative humidity of 90%.

The vacuum heat insulating materials were measured and evaluated by the method described below.

(Thermal conductivity)

The vacuum heat insulating materials described in Examples were measured for their thermal conductivities before and after they were stored in a constant-temperature vessel maintained at a temperature of 80°C for 100 days. The differences in the thermal conductivities are the differences in the values thereof before and after the storage. The smaller differences mean that higher degrees of vacuum are maintained in the vacuum heat insulating materials and that the effect of heat insulation is maintained longer.

(Example 1)

As the polycarboxylic acid type polymer, a polyacrylic acid (AC-10LHP, Mw = 250, 000, produced by Toa Gosei Co., Ltd.) was dissolved in a mixed solvent of methanol/2-propanol/MEK/water (at a weight ratio of 25/25/40/10) such that the solid content was 6% by weight, and to which an aqueous solution containing 20% by weight of sodium hydroxide was added such that the polyacrylic acid was neutralized to a degree of 2% to thereby prepare a main solution. To the above main solution was, further, added a straight-chain aliphatic polyisocyanate (Sumidur N3300, isocyanulate type based on 1, 6-hexamethylene diisocyanate, solid component: 100% by weight, Tg = -60°C, Mn = 680, produced by Sumika-Bayer Urethane Co.) in an amount of 0.4 parts by weight with respect to the polyacrylic acid, followed by the addition of an alicyclic polyisocyanate (Desmodur Z4470, isocyanulate type based on isophorone diisocyanate, dissolved in butyl acetate, solid component: 70% by weight, Tg = 70°C, Mn = 1200, produced by Sumika-Bayer Urethane Co.) in such an amount that the weight thereof after the solvent was removed was 0.4 parts by weight with respect to the polyacrylic acid, to thereby prepare a coating solution for a barrier material precursor. By using a bar coater, the coating solution was applied onto the aluminum-deposited surface of a polyethylene terephthalate film (Tetrite PC produced by Oike & Co. , Ltd..) on which aluminum has been vapor-deposited, and was, thereafter, heat-treated in a conveyer-type electric oven under the conditions of a temperature of 105°C and a passing time of 40 seconds to obtain a film having a barrier material precursor. To one liter of tap water, there was added calcium chloride in an amount of 360 mmol (40 g) calculated as metal, followed by the addition of 11g of calcium hydroxide to adjust the pH to be 12.0 (measured at a water temperature of 24°C). Thereafter, the water was heated at 40°C, stirred well, and the film having the barrier material precursor was dipped therein for 3 seconds. The film was then taken out from the hot water and dried to obtain a gas-barrier material having a coating in an amount of 1.5 g/m$^2$.

Described below is how to prepare the sheath.

A sheath was obtained by successively laminating an urethane adhesive in a thickness of 2 $\mu$m, the gas-barrier material, an urethane adhesive in a thickness of 2 $\mu$m as an adhesive layer, and an unstretched polypropylene film in a thickness of 60 $\mu$m as a heat-melt-adhesion layer on a biaxially stretched nylon film of a thickness of 15 $\mu$m.

A glass wool was used as the sheath and the core material, and a vacuum heat insulating material was obtained by the above-mentioned method of producing vacuum heat insulating material.

(Example 2)

To one liter of a water/ethanol mixed solvent (weight ratio of 30/70), there was added calcium chloride in an amount of 720 mmol (80 g) calculated as metal, followed by the addition of 22 g of calcium hydroxide to prepare a coating solution. A heath and a vacuum heat insulating material were obtained in the same manner as in Example 1 but obtaining the gas-barrier material having the gas-barrier layer by applying the above coating solution onto the barrier material precursor of Example 1 by using the bar coater instead of conducting the dip treatment of Example 1, and drying the coating solution.

(Example 3)

A gas-barrier material, a sheath and a vacuum heat insulating material were obtained in the same as in Example 2 but adding potassium hydroxide to the main solution instead of adding sodium hydroxide, and adding magnesium chloride and magnesium hydroxide to the coating solution instead of adding calcium chloride and calcium hydroxide.

(Example 4)

The polyester polyol (VYLON 200 produced by Toyo Boseki Co.) was dissolved in an ethyl acetate/MEK mixed solvent (weight ratio of 65/35) to obtain a solution of a concentration of 14% by weight. To the above solution was, further, added a straight-chain aliphatic polyisocyanate (Sumidur N3300, produced by Sumika-Bayer Urethane Co.) in an amount of 20 parts by weight with respect to the polyester polyol, followed by the addition of an alicyclic polyisocyanate (Desmodur Z4470, produced by Sumika-Bayer Urethane Co.) in such an amount that the weight thereof after the solvent was removed was 20 parts by weight with respect to the polyester polyol. The solution was adjusted with the above mixed solvent such that the total solid component was 14% by weight to thereby obtain a coating solution for forming the undercoating. By using the bar coater, the coating solution was applied onto the aluminum-deposited surface of a polyethylene terephthalate film (Tetrite PC produced by Oike & Co., Ltd..) on which aluminum has been vapor-deposited in a thickness of 12 $\mu$m, and was, thereafter, heat-treated in a box-type electric oven under the conditions of a temperature of 70°C for 2 minutes to obtain a film having an undercoating of a thickness of 0.3 $\mu$m. By using the bar coater, the coating solution for forming the barrier material precursor of Example 1 was applied onto the undercoating of the film, and was, thereafter, heat-treated in the conveyer-type electric oven under the conditions of a temperature of 105°C and a passing time of 40 seconds to obtain a barrier material precursor.

To one liter of tap water, there was added calcium chloride in an amount of 360 mmol (40 g) calculated as metal, followed by the addition of 11g of calcium hydroxide to adjust the pH to be 12.0 (measured at a water temperature of 24°C). Thereafter, the water was heated at 40°C, stirred well, and the film having the barrier material precursor was dipped therein for 3 seconds. The film was then taken out from the hot water and dried to obtain a film having an undercoating and a gas-barrier layer.

A sheath was obtained by successively laminating an urethane adhesive in a thickness of 2 $\mu$m, the above-mentioned gas-barrier material (film having the undercoating and the gas-barrier layer), an urethane adhesive in a thickness of 2 $\mu$m, and an unstretched polypropylene film in a thickness of 60 $\mu$m as a heat-melt-adhesion layer on a biaxially stretched nylon film of a thickness of 15 $\mu$m. By using the sheath, a vacuum heat insulating material was obtained by the same method as that of Example 1.

(Example 5)

Two kinds of polyester polyols at a weight ratio of 50/50, Vylon 200 (non-aqueous resin produced by Toyo Boseki Co. containing no metal element in the resin skeleton thereof: confirmed by the X-ray fluorometry) and Vylon GK570 (non-aqueous resin produced by Toyo Boseki Co. containing a metal element in the resin skeleton thereof: confirmed by the X-ray fluorometry) were dissolved in an ethyl acetate/MEK mixed solvent (weight ratio of 65/35), and to which calcium carbonate (CS3N-A, primary particle size: 0.3 $\mu$m, produced by Ube Material Industries, Ltd.) was so added that the amount thereof was 280 parts by weight with respect to the polyester polyols and that the total solid content was 35% by weight, followed by dispersion in a mill with glass beads (BZ-04 produced by Toshinriko Co.) to thereby obtain a paste. To the paste was, further, added a straight-chain aliphatic polyisocyanate (Sumidur N3300, produced by Sumika-Bayer Urethane Co.) in an amount of 20 parts by weight with respect to the polyester polyols, followed by the addition of an alicyclic polyisocyanate (Desmodur Z4470, produced by Sumika-Bayer Urethane Co.) in such an amount that the weight thereof after the solvent was removed was 20 parts by weight with respect to the polyester polyols. The solution was adjusted with the above mixed solvent such that the total solid component was 25% by weight to thereby obtain a coating solution for undercoating that comprises a coating composition containing the alkaline compound of the polyvalent metal.

By using the bar coater, the coating solution for undercoating was applied onto the aluminum-deposited surface of the polyethylene terephthalate film (Tetrite PC produced by Oike & Co., Ltd..) on which aluminum has been vapor-deposited in a thickness of 12 $\mu$m, and was, thereafter, heat-treated in the box-type electric oven under the conditions of a temperature of 70°C for 2 minutes to obtain an undercoating in an amount of 1.4 g/m$^2$.

As the polycarboxylic acid type polymer, a polyacrylic acid (AC-10LP, Mw = 25,000, produced by Toa Gosei Co., Ltd.) was dissolved in a water/acetone mixed solvent (weight ratio of 80/20) such that the solid content was 10% by weight, and to which an aqueous solution containing 20% by weight of sodium hydroxide was added such that the polyacrylic acid was neutralized to a degree of 2.5% to thereby prepare a main solution. By using the bar coater, the main solution was applied onto the undercoating of the film that has the undercoating in an amount of 1.5 g/m$^2$ to obtain a gas-barrier material precursor layer. Here, the amount the gas-barrier material precursor layer is applied stands for the amount of application thereof of when the main solution is directly applied onto the polyethylene terephthalate film (Tetrite PC produced by Oike & Co., Ltd..) on which aluminum has been vapor-deposited in a thickness of 12 $\mu$m and is dried, i.e., when the polyacrylic acid only in the main solution is dried without permitting the formation of ionic crosslinking. The film on which the main solution has been applied was heat-treated in a conveyer-type electric oven under the conditions of a temperature of 80°C and a passing time of 5 seconds to obtain a film having, on the undercoating, a gas-barrier layer that is forming ionic crosslinking in the gas-barrier material precursor layer, i.e., to obtain a gas-barrier material.

A sheath was obtained by successively laminating an urethane adhesive in a thickness of 2 $\mu$m, the above-mentioned gas-barrier material (film having the undercoating and the gas-barrier layer), an urethane adhesive in a thickness of 2 $\mu$m, and an unstretched polypropylene film in a thickness of 60 $\mu$m as a heat-melt-adhesion layer on a biaxially stretched nylon film of a thickness of 15 $\mu$m. By using the sheath, a vacuum heat insulating material was obtained by the same method as that of Example 1.

(Example 6)

A gas-barrier material, a sheath and a vacuum heat insulating material were obtained in the same manner as in Example 5 but preparing the main solution by using a water/acetone mixed solvent (weight ratio of 20/80) instead of using the water/acetone mixed solvent (weight ratio of 80/20).

(Example 7)

A gas-barrier material, a sheath and a vacuum heat insulating material were obtained in the same manner as in Example 5 but changing the amount of the calcium carbonate in the coating solution for forming the undercoating into 100 parts by weight with respect to the polyester polyols, applying the undercoating (A) in an amount of 1.0 g/m$^2$ and applying the solution (B') in an amount of 2.0 g/m$^2$.

(Example 8)

A gas-barrier material, a sheath and a vacuum heat insulating material were obtained in the same manner as in Example 5 but without adding the sodium hydroxide to the main solution.

(Example 9)

A gas-barrier material, a sheath and a vacuum heat insulating material were obtained in the same manner as in Example 5 but neutralizing the polyacrylic acid in the main solution to a degree of 4.5%.

(Example 10)

A gas-barrier material, a sheath and a vacuum heat insulating material were obtained in the same manner as in Example 5 but using an aqueous solution of potassium hydroxide instead of using the aqueous solution of sodium hydroxide in the main solution.

(Example 11)

A gas-barrier material, a sheath and a vacuum heat insulating material were obtained in the same manner as in Example 5 but using a mixed solvent of water and acetone at a weight ratio of 90/10 in the main solution.

(Example 12)

A gas-barrier material, a sheath and a vacuum heat insulating material were obtained in the same manner as in Example 5 but adding the straight-chain aliphatic polyisocyanate (Sumidur N3300, produced by Sumika-Bayer Urethane Co.) in an amount of 30 parts by weight with respect to the polyester polyols, adding the alicyclic polyisocyanate in such an amount that the weight thereof after the solvent was removed was 30 parts by weight with respect to the polyester polyols, and using a mixed solvent of water/acetone of a weight ratio of 30/70 in the main solution.

(Example 13)

A gas-barrier material, a sheath and a vacuum heat insulating material were obtained in the same manner as in Example 5 but using the magnesium carbonate (produced by Wako Pure Chemical Industries, Ltd.) instead of using the calcium carbonate in the coating solution for forming the undercoating, and applying the undercoating in an amount of 1.2 g/m$^2$.

(Example 14)

A gas-barrier material, a sheath and a vacuum heat insulating material were obtained in the same manner as in Example 5 but using the calcium hydroxide (produced by Wako Pure Chemical Industries, Ltd.) instead of using the calcium carbonate in the coating solution for forming the undercoating, and applying the undercoating in an amount of 1.1 g/m$^2$.

(Example 15)

A gas-barrier material, a sheath and a vacuum heat insulating material were obtained in the same manner as in Example 5 but using, instead of the Desmodur Z4470, the TAKENATE D110N (adduct type based on the xylylenediisocyanate, solid component: 75%, produced by Mitsui Chemical, Inc.) in such an amount that the weight thereof after the solvent was removed was 20 parts by weight with respect to the polyester polyols.

(Example 16)

A gas-barrier material, a sheath and a vacuum heat insulating material were obtained in the same manner as in Example 5 but using, instead of the Simidur N3300, the Sumidur HT (adduct type based on the 1,6-hexamethylenediisocyanate, solid component: 75%, produced by Sumika-Bayer Urethane Co.) in such an amount that the weight thereof after the solvent was removed was 20 parts by weight with respect to the polyester polyols.

(Example 17)

A gas-barrier material, a sheath and a vacuum heat insulating material were obtained in the same manner as in Example 5 but using the Vylon 550 (non-aqueous resin produced by Toyo Boseki Co. containing no metal element in the resin skeleton: confirmed by the X-ray fluorometry) instead of using the Vylon Gk570 in the coating solution for forming the undercoating.

(Example 18)

A gas-barrier material, a sheath and a vacuum heat insulating material were obtained in the same manner as in Example 5 but applying, by using the bar coater, the coating solution for forming the undercoating on the polyethylene terephthalate of the polyethylene terephthalate film (Tetrite PC produced by Oike & Co., Ltd.) on which aluminum has been vapor-deposited in a thickness of 12 $\mu$m.

(Example 19)

A gas-barrier material was obtained in the same manner as in Example 5 but applying, by using the bar coater, the coating solution for forming the undercoating on the polyethylene terephthalate film of a thickness of 12 $\mu$m, and vapor-depositing aluminum on the gas-barrier layer.
A sheath was obtained by successively laminating an urethane adhesive in a thickness of 2 $\mu$m, the above-mentioned gas-barrier material, an urethane adhesive in a thickness of 2 $\mu$m, and an unstretched polypropylene film in a thickness of 60 $\mu$m on the biaxially stretched nylon film of a thickness of 15 $\mu$m. By using the sheath, a vacuum heat insulating material was obtained in the same manner as in Example 5.

(Example 20)

In Example 5, an aluminum layer was formed by vapor deposition on the polyethylene terephthalate of the gas-barrier material to obtain a gas-barrier material that has two aluminum vapor-deposited layers.
A sheath was obtained by successively laminating an urethane adhesive in a thickness of 2 $\mu$m, the above gas-barrier material having two aluminum-deposited layers, an urethane adhesive in a thickness of 2 $\mu$m, and an unstretched polypropylene film in a thickness f 60 $\mu$m on the biaxially stretched nylon film of a thickness of 15 $\mu$m. By using the sheath, a vacuum heat insulating material was obtained in the same manner as in Example 5.

(Example 21)

In Example 5, a laminate having two aluminum vapor-deposited layers was obtained by successively laminating, on the polyethylene terephthalate of the gas-barrier material, an urethane adhesive in a thickness of 2 $\mu$m and a polyethylene terephthalate film (Tetrite PC produced by Oike & Co., Ltd..) having an aluminum layer deposited thereon in a thickness of 12 $\mu$m.
A sheath was obtained by successively laminating an urethane adhesive in a thickness of 2 $\mu$m, the above laminate having two aluminum vapor-deposited layers, an urethane adhesive in a thickness of 2 $\mu$m and an unstretched polypropylene film in a thickness of 60 $\mu$m on the biaxially stretched nylon film of a thickness of 15 $\mu$m. By using the sheath, a vacuum heat insulating material was obtained in the same manner as in Example 5.

(Example 22)

In Example 5, aluminum was vapor-deposited on the gas-barrier layer of the gas-barrier material to obtain a gas-barrier material having two aluminum vapor-deposited layers.
A sheath was obtained by successively laminating an urethane adhesive in a thickness of 2 $\mu$m, the above gas-barrier material having two aluminum vapor-deposited layers, an urethane adhesive in a thickness of 2 $\mu$m and an unstretched polypropylene film in a thickness of 60 $\mu$m on the biaxially stretched nylon film of a thickness of 15 $\mu$m. By using the sheath, a vacuum heat insulating material was obtained in the same manner as in Example 5.

(Example 23)

In Example 18, aluminum was vapor-deposited on the gas-barrier layer of the gas-barrier material to obtain a gas-barrier material having two aluminum vapor-deposited layers.
A sheath was obtained by successively laminating an urethane adhesive in a thickness of 2 $\mu$m, the above gas-barrier material having two aluminum vapor-deposited layers, an urethane adhesive in a thickness of 2 $\mu$m and an unstretched polypropylene film in a thickness of 60 $\mu$m on the biaxially stretched nylon film of a thickness of 15 $\mu$m. By using the sheath, a vacuum heat insulating material was obtained in the same manner as in Example 5.

(Example 24)

A gas-barrier material, a laminate having two aluminum vapor-deposited layers, a sheath and a vacuum heat insulating material were obtained in the same manner as in Example 20 but applying, by using the bar coater, the coating solution for forming the undercoating on the base material of the Tech Barrier TX (silica-deposited barrier film produced by Mitsubishi Plastics, Inc.) of a thickness of 12 $\mu$m.

(Comparative Example 1)

A gas-barrier material, a sheath and a vacuum heat insulating material were obtained in the same manner as in Example 1 but adding the straight-chain aliphatic polyisocyanate (Sumidur N3300 produced by Sumika-Bayer Urethane Co.) in an amount of 20 parts by weight with respect to the polyacrylic acid while adding no alicyclic polyisocyanate (Desmodur Z4470 produced by Sumika-Bayer Urethane Co.).

(Comparative Example 2)

A gas-barrier material, a sheath and a vacuum heat insulating material were obtained in the same manner as in Example 5 but using a mixed solvent of water/acetone at a weight ratio of 15/85 in the main solution.

(Comparative Example 3)

A gas-barrier material, a sheath and a vacuum heat insulating material were obtained in the same manner as in Example 5 but using a mixed solvent of water/acetone at a weight ratio of 100/0 in the main solution.

(Comparative Example 4)

A gas-barrier material, a sheath and a vacuum heat insulating material were obtained in the same manner as in Example 5 but neutralizing the polyacrylic acid in the main solution to a degree of 5.0%.

(Comparative Example 5)

A gas-barrier material, a sheath and a vacuum heat insulating material were obtained in the same manner as in Example 5 but adding the straight-chain aliphatic polyisocyanate in an amount of 35 parts by weight with respect to the polyester polyol, adding the polycyclic polyisocyanate in such an amount that the weight thereof after the solvent was removed was 35 parts by weight with respect to the polyester polyol, and using a mixed solvent of water/acetone at a weight ratio of 30/70 in the main solution.

(Comparative Example 6)

A sheath was obtained by successively laminating an urethane adhesive in a thickness of 2 $\mu$m, the polyethylene terephthalate film (Tetrite PC produced by Oike & Co., Ltd..) on which aluminum has been vapor-deposited in a thickness of 12 $\mu$m, an urethane adhesive in a thickness of 2 $\mu$m and an unstretched polypropylene film in a thickness of 60 $\mu$m on the biaxially stretched nylon film of a thickness of 15 $\mu$m. By using the sheath, a vacuum heat insulating material was obtained in the same manner as in Example 1.

(Comparative Example 7)

A gas-barrier material, a sheath and a vacuum heat insulating material were obtained in the same manner as in Example 5 but applying, by using the bar coater, the coating solution for forming the undercoating on a polyethylene terephthalate film of a thickness of 12 $\mu$m.

Table 1

| | Undercoating (A) | | | | | | | | | | |
|---|---|---|---|---|---|---|---|---|---|---|---|
| | Main resin | | | Isocyanate type curing agent | | | | Alkaline compound of polyvalent metal | Solvent composition | | |
| | | | | Aliphatic | | Alicyclic | | | | | |
| | Vylon GK570 | Vylon 200 | Vylon 550 | Sumidur N3300 (HDI-nulate) | Sumidur HT (HDI adduct) | Desmodur Z4470 (IPDI-nulate) | TAKENATE D110N (XDI adduct) | Kind | Ethyl acetate | MEK |
| | *1 | *1 | *1 | *1 | *1 | wt. pts. | wt. pts. | wt. pts. | wt. % | wt. % |
| Ex. 1 | layer (A) is not formed | | | | | | | | | |
| Ex. 2 | layer (A) is not formed | | | | | | | | | |
| Ex. 3 | layer (A) is not formed | | | | | | | | | |
| Ex. 4 | | 100 | | 20 | | 20 | | | 65 | 35 |
| Ex. 5 | 50 | 50 | | 20 | | 20 | | *2 280 | 65 | 35 |
| Ex. 6 | 50 | 50 | | 20 | | 20 | | *2 280 | 65 | 35 |
| Ex. 7 | 50 | 50 | | 20 | | 20 | | *2 100 | 65 | 35 |
| Ex. 8 | 50 | 50 | | 20 | | 20 | | *2 280 | 65 | 35 |
| Ex. 9 | 50 | 50 | | 20 | | 20 | | *2 280 | 65 | 35 |
| Ex. 10 | 50 | 50 | | 20 | | 20 | | *2 280 | 65 | 35 |
| Ex. 11 | 50 | 50 | | 20 | | 20 | | *2 280 | 65 | 35 |
| Ex. 12 | 50 | 50 | | 30 | | 20 | | *2 280 | 65 | 35 |
| Ex. 13 | 50 | 50 | | 20 | | 20 | | *3 280 | 65 | 35 |
| Ex. 14 | 50 | 50 | | 20 | | 20 | | *4 280 | 65 | 35 |
| Ex. 15 | 50 | 50 | | 20 | | 20 | 20 | *2 280 | 65 | 35 |
| Ex. 16 | 50 | 50 | | | 20 | 20 | | *2 280 | 65 | 35 |
| Ex. 17 | | 50 | 50 | 20 | | 20 | | *2 280 | 65 | 35 |

*1: wt. pts., *2: calcium carbonate, *3: magnesium carbonate, *4: calcium hydroxide

EP 3 203 133 A1

Table 1 (continued)

| | Gas-barrier material precursor | | | | | | | | | | | *3 |
| | Polyacrylic acid | Monovalent metal compound | | Isocyanate type curing agent | | Solvent composition | | | | | | |
| | | | | Aliphatic | Alicyclic | | | | | | | |
| | Kind | NaOH | KOH | Sumidur N3300 (HDI-nulate) | Desmodur Z4470 (IPDI-nulate) | MeOH | IPA | MEK | Acetone | Water | | |
| | | *1 | *1 | wt. pts. | wt. pts. | *2 | *2 | *2 | wt. % | wt. % | | |
| Ex. 1 | AC-10LHP | 2.0 | | 0.4 | 0.4 | 25 | 25 | 40 | | 10 | | dipped, Ca |
| Ex. 2 | AC-10LHP | 2.0 | | 0.4 | 0.4 | 25 | 25 | 40 | | 10 | | applied, Ca |
| Ex. 3 | AC-10LHP | | 2 | 0.4 | 0.4 | 25 | 25 | 40 | | 10 | | applied, Mg |
| Ex. 4 | AC-10LHP | 2.0 | | 0.4 | 0.4 | 25 | 25 | 40 | | 10 | | dipped, Ca |
| Ex. 5 | AC-10LP | 2.5 | | | | | | | 20 | 80 | | |
| Ex. 6 | AC-10LP | 2.5 | | | | | | | 80 | 20 | | |
| Ex. 7 | AC-10LP | 2.5 | | | | | | | 20 | 80 | | |
| Ex. 8 | AC-10LP | | | | | | | | 20 | 80 | | |
| Ex. 9 | AC-10LP | 4.5 | | | | | | | 20 | 80 | | |
| Ex. 10 | AC-10LP | | 2.5 | | | | | | 20 | 80 | | |
| Ex. 11 | AC-10LP | 2.5 | | | | | | | 10 | 90 | | |
| Ex. 12 | AC-10LP | 2.5 | | | | | | | 70 | 30 | | |
| Ex. 13 | AC-10LP | 2.5 | | | | | | | 20 | 80 | | |
| Ex. 14 | AC-10LP | 2.5 | | | | | | | 20 | 80 | | |
| Ex. 15 | AC-10LP | 2.5 | | | | | | | 20 | 80 | | |
| Ex. 16 | AC-10LP | 2.5 | | | | | | | 20 | 80 | | |
| Ex. 17 | AC-10LP | 2.5 | | | | | | | 20 | 80 | | |

*1: Neutralization %       *3: Gas-barrier precursor treated with solution
*2: wt. %                     containing alkaline compound of polyvalent metal

EP 3 203 133 A1

Table 1 (continued)

| | Undercoating (A) | | | | | | | | | |
|---|---|---|---|---|---|---|---|---|---|---|
| | Main resin | | | Isocyanate type curing agent | | | | Alkaline compound of polyvalent metal | Solvent composition | |
| | | | | Aliphatic | | Alicyclic | | | | |
| | Vylon GK570 | Vylon 200 | Vylon 550 | Sumidur N3300 (HDI-nulate) | Sumidur HT (HDI adduct) | Desmodur Z4470 (IPDI-nulate) | TAKENATE D110N (XDI adduct) | Kind | Ethyl acetate | MEK |
| | *1 | *1 | *1 | *1 | *1 | wt. pts. | wt. pts. | wt. pts. | wt. % | wt. % |
| Ex. 18-24 | 50 | 50 | | 20 | | 20 | | *2 280 | 65 | 35 |
| Comp. Ex. 1 | layer (A) is not formed | | | | | | | | | |
| Comp. Ex. 2 | 50 | 50 | | 20 | | 20 | | *2 280 | 65 | 35 |
| Comp. Ex. 3 | 50 | 50 | | 20 | | 20 | | *2 280 | 65 | 35 |
| Comp. Ex. 4 | 50 | 50 | | 20 | | 20 | | *2 280 | 65 | 35 |
| Comp. Ex. 5 | 50 | 50 | | 35 | | 35 | | *2 280 | 65 | 35 |
| Comp. Ex. 6 | layer (A) is not formed | | | | | | | | | |
| Comp. Ex. 7 | 50 | 50 | | 20 | | 20 | | *2 280 | 65 | 35 |

*1: wt. pts., *2: calcium carbonate, *3: magnesium carbonate, *4: calcium hydroxide

Table 1 (continued)

| | Gas-barrier material precursor | | | | | | | | | | *3 |
|---|---|---|---|---|---|---|---|---|---|---|---|
| | Polyacrylic acid | Monovalent metal compound | | Isocyanate type curing agent | | Solvent composition | | | | | |
| | | | | Aliphatic | Alicyclic | | | | | | |
| | Kind | NaOH | KOH | Sumidur N3300 (HDI-nulate) | Desmodur Z4470 (IPDI-nulate) | MeOH | IPA | MEK | Acetone | Water | |
| | | *1 | *1 | wt. pts. | wt. pts. | *2 | *2 | *2 | wt. % | wt. % | |
| Ex. 18-24 | AC-10LP | 2.5 | | | | | | | 20 | 80 | |
| Comp. Ex. 1 | AC-10LHP | 2.0 | | 20 | | 25 | 25 | 40 | | 10 | dipped, Ca |
| Comp. Ex. 2 | AC-10LP | 2.5 | | | | | | | 85 | 15 | |
| Comp. Ex. 3 | AC-10LP | 2.5 | | | | | | | | 100 | |
| Comp. Ex. 4 | AC-10LP | 5.0 | | | | | | | 20 | 80 | |
| Comp. Ex. 5 | AC-10LP | 2.5 | | | | | | | 70 | 30 | |
| Comp. Ex. 6 | Layer (B) is not formed | | | | | | | | | | |
| Comp. Ex. 7 | AC-10LP | 2.5 | | | | | | | 20 | 80 | |

*1: Neutralization %      *3: Gas-barrier precursor treated with solution
*2: wt. %                     containing alkaline compound of polyvalent metal

EP 3 203 133 A1

Table 2

| | Layer constitution (/ means layer laminated via the urethane adhesive |
|---|---|
| Examples 1 to 3 | CPP / layer (B) - Al-deposited layer - PET / ONY |
| Examples 4 to 17 | CPP / layer (B) - layer (A) - Al-deposited layer - PET / ONY |
| Example 18 | CPP / layer (B) - layer (A) - PET - Al-deposited layer / ONY |
| Example 19 | CPP / Al-deposited layer - layer (B) - layer (A) - PET / ONY |
| Example 20 | CPP / layer (B) - layer (A) - Al-deposited layer - PET - Al-deposited layer / ONY |
| Example 21 | CPP / layer (B) - layer (A) - Al-deposited layer - PET / Al-deposited layer - PET / ONY |
| Example 22 | CPP / Al-deposited layer - layer (B) - layer (A) - Al-deposited layer - PET / ONY |
| Example 23 | CPP / Al-deposited layer - layer (B) - layer (A) - PET - Al-deposited layer / ONY |
| Example 24 | CPP / layer (B) - layer (A) - Tech Barrier / Al-deposited layer - PET / ONY |
| Comp. Ex. 1 | CPP / layer (B) - Al-deposited layer - PET / ONY |
| Comp. Ex. 2 to 5 | CPP / layer (B) - layer (A) - Al-deposited layer - PET / ONY |
| Comp. Ex. 6 | CPP / Al-deposited layer - PET / ONY |
| Comp. Ex. 7 | CPP / layer (B) - layer (A) - PET / ONY |
| CPP: unstretched polypropylene<br>PET: polyethylene terephthalate<br>ONY: biaxially stretched nylon | |

Table 3 shows the ionically crosslinked ratios of the gas-barrier layers obtained in Examples and Comparative Examples, contents of the monovalent metal elements and the polyvalent metal elements as found by using the ICP emission spectroscope, contents of nitrogen per the total amount of nitrogen and carbon as found by using the organic element analyzer, contents of nitrogen per the total amount of carbon, oxygen and nitrogen in the surface of the gas-barrier layer, in the undercoating and in the region (x) as found by the analysis of the compositions by using XPS, amounts of permeation of oxygen-nitrogen-water vapor, and thermal conductivities.

Table 3

| | Contents of elements in the gas-barrier layer (B) | | | Content of nitrogen as measured by XPS | | | Ratio of ionic crosslinking % |
|---|---|---|---|---|---|---|---|
| | Polyvalent metal (wt%) | Monovalent metal (wt%) | Amount of nitrogen (wt%) per total amount of nitrogen and carbon | In the surface of layer (B) (atm%) | Layer (A) | | |
| | | | | | Region (a) (atm%) | Other than the region (a) (atm%) | |
| Ex. 1 | 15.1 | 0.68 | 0.10 | 1.6 | – | – | 63 |
| Ex. 2 | 14.4 | 0.69 | 0.11 | 1.4 | – | – | 60 |
| Ex. 3 | 10.4 | 0.99 | 0.10 | 1.4 | – | – | 58 |
| Ex. 4 | 15.0 | 0.68 | 0.11 | 1.5 | – | – | 64 |
| Ex. 5 | 13.1 | 0.7 | 0.15 | 1.3 | 5.8 | 3.1 | 54 |
| Ex. 6 | 5.6 | 0.76 | 1.74 | 12.1 | 5.2 | 3.2 | 20 |
| Ex. 7 | 5.9 | 0.74 | 0.22 | 1.9 | 9.2 | 3.4 | 28 |
| Ex. 8 | 14.1 | ND | 0.17 | 1.3 | 5.3 | 3.2 | 54 |
| Ex. 9 | 13.6 | 1.2 | 0.12 | 1.3 | 5.7 | 3.2 | 58 |
| Ex. 10 | 13.4 | 1.2 | 0.19 | 1.3 | 5.8 | 3.0 | 57 |
| Ex. 11 | 14.2 | 0.72 | 0.04 | 1.1 | 5.9 | 3.4 | 59 |
| Ex. 12 | 7.8 | 0.73 | 2.71 | 11.8 | 6.3 | 3.8 | 32 |
| Ex. 13 | 8.9 | 0.71 | 0.11 | 1.2 | 5.7 | 3.3 | 56 |
| Ex. 14 | 13.3 | 0.7 | 0.21 | 1.1 | 5.8 | 3.3 | 54 |
| Ex. 15 | 10.4 | 0.71 | 0.07 | 1.4 | 4.6 | 3.0 | 54 |
| Ex. 16 | 14.6 | 0.69 | 0.21 | 1.3 | 4.4 | 2.9 | 53 |
| Ex. 17 | 13.3 | 0.73 | 0.21 | 1.4 | 5.8 | 3.2 | 53 |

Table 3 (continued)

| | Equivalents used for the ionic crosslinking | Amounts of gases permeated through the sheath | | | Thermal conductivity of the vacuum heat insulating material W/mK | | |
|---|---|---|---|---|---|---|---|
| | | Oxygen cc/m$^2$· day· atm | Nitrogen cc/m$^2$· day· atm | Water vapor g/m$^2$· day· atm | Initially | After 100 days | Difference |
| Ex. 1 | 0.63 | <0.1 | <0.1 | 0.6 | 0.0025 | 0.0049 | 0.0024 |
| Ex. 2 | 0.6 | <0.1 | <0.1 | 0.6 | 0.0024 | 0.0050 | 0.0026 |
| Ex. 3 | 0.58 | <0.1 | <0.1 | 0.6 | 0.0025 | 0.0049 | 0.0024 |
| Ex. 4 | 0.64 | <0.1 | <0.1 | 0.6 | 0.0024 | 0.0048 | 0.0024 |
| Ex. 5 | 0.54 | <0.1 | <0.1 | 0.6 | 0.0025 | 0.0051 | 0.0026 |
| Ex. 6 | 0.2 | <0.1 | <0.1 | 0.6 | 0.0024 | 0.0048 | 0.0024 |
| Ex. 7 | 0.28 | <0.1 | <0.1 | 0.6 | 0.0025 | 0.0045 | 0.0020 |
| Ex. 8 | 0.54 | <0.1 | <0.1 | 0.6 | 0.0025 | 0.0049 | 0.0024 |
| Ex. 9 | 0.58 | <0.1 | <0.1 | 0.6 | 0.0024 | 0.0048 | 0.0024 |
| Ex. 10 | 0.57 | <0.1 | <0.1 | 0.6 | 0.0024 | 0.0049 | 0.0025 |
| Ex. 11 | 0.59 | <0.1 | <0.1 | 0.6 | 0.0024 | 0.0048 | 0.0024 |
| Ex. 12 | 0.32 | <0.1 | 0.1 | 0.6 | 0.0026 | 0.0054 | 0.0028 |
| Ex. 13 | 0.56 | <0.1 | <0.1 | 0.6 | 0.0025 | 0.0050 | 0.0025 |
| Ex. 14 | 0.54 | <0.1 | <0.1 | 0.6 | 0.0025 | 0.0049 | 0.0024 |
| Ex. 15 | 0.54 | <0.1 | <0.1 | 0.6 | 0.0024 | 0.0049 | 0.0025 |
| Ex. 16 | 0.53 | <0.1 | <0.1 | 0.6 | 0.0024 | 0.0048 | 0.0024 |
| Ex. 17 | 0.53 | <0.1 | <0.1 | 0.6 | 0.0025 | 0.0050 | 0.0025 |

Table 3 (continued)

| | Contents of elements in the gas-barrier layer (B) | | | Content of nitrogen as measured by XPS | | | Ratio of ionic crosslinking % |
| | Polyvalent metal (wt%) | Monovalent metal (wt%) | Amount of nitrogen (wt%) per total amount of nitrogen and carbon | In the surface of layer (B) (atm%) | Layer (A) | | |
| | | | | | Region (a) (atm%) | Other than the region (a) (atm%) | |
| Ex. 18 | 13.1 | 0.7 | 0.15 | 1.3 | 5.8 | 3.1 | 54 |
| Ex. 19 | 13.1 | 0.7 | 0.15 | 1.3 | 5.8 | 3.1 | 54 |
| Ex. 20 | 13.1 | 0.7 | 0.15 | 1.3 | 5.8 | 3.1 | 54 |
| Ex. 21 | 13.1 | 0.7 | 0.15 | 1.3 | 5.8 | 3.1 | 54 |
| Ex. 22 | 13.1 | 0.7 | 0.15 | 1.3 | 5.8 | 3.1 | 54 |
| Ex. 23 | 13.1 | 0.7 | 0.15 | 1.3 | 5.8 | 3.1 | 54 |
| Ex. 24 | 13.1 | 0.7 | 0.15 | 1.3 | 5.8 | 3.1 | 54 |
| *1 1 | 13.6 | 0.66 | 4.40 | 13.2 | – | – | 57 |
| *1 2 | 4.3 | 0.69 | 2.50 | 12.4 | 5.2 | 3.1 | 16 |
| *1 3 | 13.7 | 0.55 | <0.01 | <1.0 | 5.8 | 3.4 | 57 |
| *1 4 | 12.1 | 1.52 | 0.18 | 1.2 | 5.5 | 3.2 | 58 |
| *1 5 | 8.8 | 0.58 | 3.30 | 12.9 | 5.1 | 3.0 | 35 |
| *1 6 | no gas-barrier material is used | | | | | | |
| *1 7 | 13.1 | 0.7 | 0.15 | 1.3 | 5.8 | 3.1 | 54 |

*1: Comparative Example

EP 3 203 133 A1

Table 3 (continued)

| | Equivalents used for the ionic crosslinking | Amounts of gases permeated through the sheath | | | Thermal conductivity of the vacuum heat insulating material W/mK | | |
|---|---|---|---|---|---|---|---|
| | | Oxygen cc/m$^2$· day· atm | Nitrogen cc/m$^2$· day· atm | Water vapor g/m$^2$· day· atm | Initially | After 100 days | Difference |
| Ex. 18 | 0.54 | <0.1 | <0.1 | 0.6 | 0.0025 | 0.0049 | 0.0024 |
| Ex. 19 | 0.54 | <0.1 | <0.1 | 0.6 | 0.0025 | 0.0050 | 0.0025 |
| Ex. 20 | 0.54 | <0.1 | <0.1 | 0.3 | 0.0024 | 0.0038 | 0.0014 |
| Ex. 21 | 0.54 | <0.1 | <0.1 | 0.3 | 0.0024 | 0.0038 | 0.0014 |
| Ex. 22 | 0.54 | <0.1 | <0.1 | 0.3 | 0.0024 | 0.0036 | 0.0012 |
| Ex. 23 | 0.54 | <0.1 | <0.1 | 0.3 | 0.0024 | 0.0037 | 0.0013 |
| Ex. 24 | 0.54 | <0.1 | <0.1 | 0.3 | 0.0024 | 0.0036 | 0.0012 |
| *1 1 | 0.57 | 0.7 | 0.8 | 0.6 | 0.0026 | 0.0093 | 0.0067 |
| *1 2 | 0.16 | 0.7 | 0.8 | 0.6 | 0.0026 | 0.0093 | 0.0067 |
| *1 3 | 0.57 | 0.4 | 0.5 | 0.6 | 0.0026 | 0.0068 | 0.0042 |
| *1 4 | 0.58 | 0.4 | 0.5 | 0.6 | 0.0025 | 0.0074 | 0.0049 |
| *1 5 | 0.35 | 0.7 | 0.8 | 0.6 | 0.0025 | 0.0091 | 0.0066 |
| *1 6 | | 0.7 | 0.8 | 0.6 | 0.0026 | 0.0093 | 0.0067 |
| *1 7 | 0.54 | <0.1 | <0.1 | 3.4 | 0.0026 | 0.0154 | 0.0128 |

*1: Comparative Example

(Example 25)

As the polycarboxylic acid type polymer, a polyacrylic acid (AC-10LHP, Mw = 250, 000, produced by Toa Gosei Co. , Ltd.) was added to a mixed solvent of methanol/2-propanol/MEK/water (weight ratio of 25/25/40/10) in such an amount that the solid content thereof was 6% by weight. Next, an aqueous solution containing 20% by weight of sodium hydroxide was so added that the polyacrylic acid was neutralized to a degree of 2% to thereby obtain a main solution. To the above main solution was, further, added a straight-chain aliphatic polyisocyanate (Sumidur N3300, isocyanulate type based on 1,6-hexamethylene diisocyanate, solid component: 100% by weight, Tg = -60°C, Mn = 680, produced by Sumika-Bayer Urethane Co.) in an amount of 0.4 parts by weight with respect to the polyacrylic acid, followed by the addition of an alicyclic polyisocyanate (Desmodur Z4470, isocyanulate type based on isophorone diisocyanate, dissolved in butyl acetate, solid component: 70% by weight, Tg = 70°C, Mn = 1200, produced by Sumika-Bayer Urethane Co.) in such an amount that the weight thereof after the solvent was removed was 0.4 parts by weight with respect to the polyacrylic acid, to thereby prepare a coating solution for a barrier material precursor. By using a bar coater, the coating solution was applied onto the aluminum-deposited surface of the polyethylene terephthalate film (Tetrite PC produced by Oike & Co., Ltd..) on which aluminum has been vapor-deposited, and was, thereafter, heat-treated in a conveyer-type electric oven under the conditions of a temperature of 105°C and a passing time of 40 seconds to obtain a film having a barrier material precursor. To one liter of tap water, there was added calcium chloride in an amount of 360 mmol (40 g) calculated as metal, followed by the addition of 11g of calcium hydroxide to adjust the pH to be 12.0 (measured at a water temperature of 24°C). Thereafter, the water was heated at 40°C, stirred well, and the film having the barrier material precursor was dipped therein for 3 seconds. The film was then taken out from the hot water and dried to obtain a gas-barrier material having a gas-barrier layer in an amount of 1.5 g/m$^2$.

Described below is how to prepare the sheath.

A gas-barrier laminate was obtained by corona-treating the gas-barrier layer of the gas-barrier material, and extrusion-laminating thereon a reactive group-containing low-density polyethylene resin (hereinafter, "reactive group-containing LDPE") (Novatech™LD LC605Y, MFR: 7.3 g/10 min., density: 0.918 g/cm$^3$, produced by Japan Polyethylene Corporation.) as a heat-melt-adhesion layer in a thickness of 50 $\mu$m at 260°C and a line speed of 100 m/min. On the PET film of the gas-barrier laminate, there were successively dry-laminated an urethane adhesive in a thickness of 2 $\mu$m and a biaxially stretched nylon film in a thickness of 15 $\mu$m that serves as the outermost layer to thereby obtain a sheath. By using the sheath, a vacuum heat insulating material was obtained by the above-mentioned method of producing the vacuum heat insulating material.

(Example 26)

Two kinds of polyester polyols at a weight ratio of 50/50, Vylon 200 (non-aqueous resin produced by Toyo Boseki Co. containing no metal element in the resin skeleton thereof: confirmed by the X-ray fluorometry) and Vylon GK570 (non-aqueous resin produced by Toyo Boseki Co. containing a metal element in the resin skeleton thereof: confirmed by the X-ray fluorometry) were dissolved in an ethyl acetate/MEK mixed solvent (weight ratio of 65/35), and to which calcium carbonate (CS3N-A, primary particle size: 0.3 $\mu$m, produced by Ube Material Industries, Ltd.) was so added that the amount thereof was 280 parts by weight with respect to the polyester polyols and that the total solid content was 35% by weight, followed by dispersion in a mill with glass beads (BZ-04 produced by Toshinriko Co.) to thereby obtain a paste thereof. To the paste was, further, added a straight-chain aliphatic polyisocyanate (Sumidur N3300, produced by Sumika-Bayer Urethane Co.) in an amount of 20 parts by weight with respect to the polyester polyols, followed by the addition of an alicyclic polyisocyanate (Desmodur Z4470, produced by Sumika-Bayer Urethane Co.) in such an amount that the weight thereof after the solvent was removed was 20 parts by weight with respect to the polyester polyols. The solution was adjusted with the above mixed solvent such that the total solid component was 25% by weight to thereby obtain a coating solution for forming the undercoating comprising a composition that contains the alkaline compound of the polyvalent metal.

By using the bar coater, the coating solution for forming the undercoating was applied onto the aluminum-deposited surface of the polyethylene terephthalate film (Tetrite PC produced by Oike & Co., Ltd..) on which aluminum has been vapor-deposited in a thickness of 12 $\mu$m, and was, thereafter, heat-treated in the box-type electric oven under the conditions of a temperature of 70°C for 2 minutes to obtain a film having an undercoating applied in an amount of 1.4 g/m$^2$.

As the polycarboxylic acid type polymer, a polyacrylic acid (AC-10LP, Mw = 25,000, produced by Toa Gosei Co., Ltd.) was dissolved in a water/acetone mixed solvent (weight ratio of 80/20) such that the solid content was 10% by weight, and to which an aqueous solution containing 20% by weight of sodium hydroxide was added such that the polyacrylic acid was neutralized to a degree of 2.5% to thereby prepare a main solution.

By using the bar coater, the main solution was applied in an amount of 1.5 g/m$^2$ onto the undercoating of the film that has the undercoating to obtain a gas-barrier material precursor layer. Here, the amount the gas-barrier material precursor layer is applied stands for the amount of application thereof of when the main solution is directly applied onto the polyethylene terephthalate film (Tetrite PC produced by Oike & Co., Ltd.) on which aluminum has been vapor-deposited in a thickness of 12 $\mu$m and is dried, i.e., when the polyacrylic acid only in the main solution is dried without permitting the formation of ionic crosslinking.

The film on which the main solution has been applied was heat-treated in a conveyer-type electric oven under the conditions of a temperature of 80°C and a passing time of 5 seconds to obtain a film having, on the undercoating, a gas-barrier layer that is forming ionic crosslinking in the gas-barrier material precursor layer, i.e., to obtain a gas-barrier material. A sheath was obtained in the same manner as in Example 25 by forming the heat-melt-adhesion layer on the gas-barrier layer of the gas-barrier material and forming the outermost layer on the PET film of the gas-barrier material. By using the sheath, a vacuum heat insulating material was obtained in the same manner as in Example 25.

(Example 27)

A gas-barrier material, a sheath and a vacuum heat insulating material were obtained in the same manner as in Example 26 but using an ethylene-methacrylic acid copolymer resin (hereinafter "EMAA") (Nucrel AN42012C, MFR: 7.0g/10min. density: 0.940 g/cm$^3$, produced by Du Pont-Mitsui Polychemicals Co. , Ltd.) as the reactive group-containing LDPE that forms the heat-melt-adhesion layer.

(Example 28)

A gas-barrier material, a sheath and a vacuum heat insulating material were obtained in the same manner as in Example 26 but using an ionomer resin (Himilan 1652, MFR: 5.5 g/10 min. density: 0.950 g/cm$^3$, produced by Du Pont-Mitsui Polychemicals Co. , Ltd.) as the reactive group-containing LDPE that forms the heat-melt-adhesion layer.

(Example 29)

A gas-barrier material, a sheath and a vacuum heat insulating material were obtained in the same manner as in Example 26 but using a metallocene-type straight-chain low-density polyethylene resin to which no antioxidant has been added (hereinafter "antioxidant-free m-LLDPE") (Lumitac 08L51A, MFR: 21g/10 min. density: 0.898 g/cm$^3$, produced by Tosoh Corporation.) as the reactive group-containing LDPE that forms the heat-melt-adhesion layer.

(Example 30)

A gas-barrier material, a sheath and a vacuum heat insulating material were obtained in the same manner as in Example 26 but using a metallocene-type straight-chain low-density polyethylene resin (hereinafter "m-LLDPE") (Kernel KC577T, MFR: 15 g/10 min., density: 0.910 g/cm$^3$, produced by Japan Polyethylene Corporation.) as the reactive group-containing LDPE that forms the heat-melt-adhesion layer.

(Example 31)

A gas-barrier material, a sheath and a vacuum heat insulating material were obtained in the same manner as in Example 26 but using a low-density polyethylene resin to which no antioxidant has been added (hereinafter "antioxidant-free m-LLDPE") (NUC-8080, MFR: 7.5 g/10 min. density: 0.918 g/cm$^3$, produced by Nihon Unicar Co.) as the reactive group-containing LDPE that forms the heat-melt-adhesion layer.

(Example 32)

A gas-barrier material, a sheath and a vacuum heat insulating material were obtained in the same manner as in Example 26 but using an LDPE to which no antioxidant has been added (Novatech LC520, MFR: 3.6 g/10 min. density: 0.923 g/cm$^3$, produced by Japan Polyethylene Corporation.) as the reactive group-containing LDPE that forms the heat-melt-adhesion layer.

(Example 33)

A gas-barrier material, a sheath and a vacuum heat insulating material were obtained in the same manner as in Example 26 but using a metallocene-type polypropylene (hereinafter "m-PP") (Wintech WFX4TA, MFR: 7.0 g/10 min. density: 0.9 g/cm$^3$, produced by Japan Polyprooylene Corporation.) as the reactive group-containing LDPE that forms the heat-melt-adhesion layer.

(Example 34)

A gas-barrier material, a sheath and a vacuum heat insulating material were obtained in the same manner as in Example 26 but using an adhesive polyolefin (ADMERQE 840, MFR: 9.2 g/10 min. density: 0.89 g/cm$^3$, produced by Mitsui Chemical, Inc.) as the reactive group-containing LDPE that forms the heat-melt-adhesion layer.

(Example 35)

In Example 26, the polyethylene terephthalate on which aluminum has been vapor-deposited (Tetrite PC produced by Oike & Co. , Ltd.) was used as the biaxially stretched nylon on which aluminum has been vapor-deposited (hereinafter "AL-deposited-ONY"). A sheath was obtained by using the AL-deposited-ONY as the outermost layer of the sheath bag. By using the sheath, a vacuum heat insulating material was obtained by the above-mentioned method of producing the vacuum heat insulating material.

(Example 36)

A gas-barrier material, a sheath and a vacuum heat insulating material were obtained in the same manner as in Example 26 but forming the heat-melt-adhesion layer by coextrusion-laminating an adhesive polyolefin (ADMER NE827, MFR: 5.6 g/10 min., density: 0.909 g/cm$^3$ produced by Mitsui Chemical, Inc.) and a low-density polyethylene (hereinafter "LDPE") (Novatech™LD LC600A, MFR: 7. 0 g/10 min. , density: 0.918 g/cm$^3$, produced by Japan Polyethylene Corporation.) in a thickness of 50 $\mu$m (adhesive polyolefin 5 $\mu$m in thickness and low-density polyethylene 45 $\mu$m in thickness) at 260°C and at a line velocity of 100 m/min.

(Comparative Example 8)

A polyacrylic acid (AC-10HLP, Mw = 250,000, produced by Toa Gosei Co., Ltd.) was dissolved in water to obtain an aqueous solution of a solid content of 15% by weight, and to which an aqueous solution containing 20% by weight of sodium hydroxide was added such that the polyacrylic acid was neutralized to a degree of 2%. To the aqueous solution of the partly neutralized polyacrylic acid, there was added an aqueous solution of a soluble starch of a solid component of 15% by weight (produced by Wako Pure Chemical Industries, Ltd.) at a weight ratio of 70:30 to obtain a mixed solution. By using the bar coater, the aqueous solution was applied onto the biaxially stretched polyethylene terephthalate film of a thickness of 12 $\mu$m, and was heat-treated in a box-type electric oven under the conditions of a temperature of 200°C and a treating time of 10 minutes to obtain a gas-barrier material applied in an amount of 1.5 g/m$^2$. By using the gas-barrier material, a sheath and a vacuum heat insulating material were obtained in the same manner as in Example 25.

(Comparative Example 9)

The heat treatment was conducted in Comparative Example 8. Thereafter, 40 g of calcium chloride and 11 g of calcium hydroxide were added to one liter of tap water to prepare a solution for dip treatment. In the solution for dip treatment heated at 40°C, the gas-barrier material was dipped for 3 seconds with good stirring to obtain a sheath and a vacuum heat insulating material in the same manner as in Example 25.

(Comparative Example 10)

A vacuum heat insulating material was obtained in the same manner as in Example 25 but extrusion-laminating the reactive group-containing LDPE on the aluminum layer deposited on the polyethylene terephthalate film (Tetrite PC produced by Oike & Co. , Ltd.) on which aluminum has been vapor-deposited instead of applying the coating solution for forming the barrier material precursor on the polyethylene terephthalate film (Tetrite PC produced by Oike & Co. , Ltd.) on which aluminum layer has been vapor-deposited in a thickness of 12 $\mu$m.

Table 4

| | Undercoating (A) | | | | | | | | | |
|---|---|---|---|---|---|---|---|---|---|---|
| | Main resin | | | Isocyanate type curing agent | | | | Alkaline compound of polyvalent metal | Solvent composition | |
| | | | | Aliphatic | | Alicyclic | | | | |
| | Vylon GK570 | Vylon 200 | Vylon 550 | Sumidur N3300 (HDI-nulate) | Sumidur HT (HDI adduct) | Desmodur Z4470 (IPDI-nulate) | TAKENATE D110N (XDI adduct) | Kind | Ethyl acetate | MEK |
| | *1 | *1 | *1 | *1 | *1 | wt. pts. | wt. pts. | wt. pts. | wt. % | wt. % |
| Ex. 25 | layer (A) is not formed | | | | | | | | | |
| Ex. 26-36 | 50 | 50 | | 20 | | 20 | | *2 280 | 65 | 35 |
| Comp. Ex. 8 | layer (A) is not formed | | | | | | | | | |
| Comp. Ex. 9 | layer (A) is not formed | | | | | | | | | |
| Comp. Ex. 10 | layer (A) is not formed | | | | | | | | | |

*1: wt. pts., *2: calcium carbonate

EP 3 203 133 A1

Table 4 (continued)

| | Gas-barrier material precursor | | | | | | | | | | *3 |
| | Polyacrylic acid | Monovalent metal compound | | Isocyanate type curing agent | | Solvent composition | | | | | |
| | | | | Aliphatic | Alicyclic | | | | | | |
| | Kind | NaOH | KOH | Sumidur N3300 (HDI-nulate) | Desmodur Z4470 (IPDI-nulate) | MeOH | IPA | MEK | Acetone | Water | |
| | | *1 | *1 | wt. pts. | wt. pts. | *2 | *2 | *2 | wt. % | wt. % | |
| Ex. 25 | AC-10LHP | 2 | | 0.4 | 0.4 | 25 | 25 | 40 | | 10 | dipped, Ca |
| Ex. 26-36 | AC-10LP | 2.5 | | | | | | | 20 | 80 | |
| Comp. Ex. 8 | AC-10LHP | 2 | | | | | | | | | |
| Comp. Ex. 9 | AC-10LHP | 2 | | | | | | | | 100 | dipped, Ca |
| Comp. Ex. 10 | | | | | | | | | | | |

*1: Neutralization %, *2: wt. %,

*3: Gas-barrier precursor treated with solution containing alkaline compound of polyvalent metal

EP 3 203 133 A1

Table 5

|  | Layer constitution |
|---|---|
| Example 25 | heat-melt-adhesion layer - layer (B) - AL-deposited layer - PET / ONY |
| Examples 26 - 34 | heat-melt-adhesion layer - layer (B) - layer (A) - AL-deposited layer - PET / ONY |
| Example 35 | heat-melt-adhesion layer - layer (B) -layer (A) - AL-deposited layer - ONY |
| Example 36 | heat-melt-adhesion (coextruded) - layer (B) - layer (A) - AL-deposited layer - PET / ONY |
| Comp. Ex. 8 - 9 | heat-melt-adhesion layer - layer (B) - AL-deposited layer - PET / ONY |
| Comp. Ex. 10 | heat-melt-adhesion layer - AL-deposited layer - PET / ONY |

Table 6

|  | Resin for heat-melt-adhesion layer | MFR | Density |
|---|---|---|---|
| Examples 25 and 26 | reactive group-containing LDPE, Novatech LC605Y | 7.3 | 0.918 |
| Example 27 | EMAA Nuclel AN42012C | 7.0 | 0.940 |
| Example 28 | Ionomer resin, Himilan 1652 | 5.5 | 0.950 |
| Example 29 | antioxidant-free m-LLDPE, Lumitach 08L51A | 21.0 | 0.898 |
| Example 30 | m-LLDPE, Kernel KC577T | 15.0 | 0.910 |
| Example 31 | antioxidant-free LDPE, NUC-8080 | 7.5 | 0.918 |
| Example 32 | antioxidant-free LDPE Novatech LC520 | 3.6 | 0.923 |
| Example 33 | m-PP Wintech WFX4TA | 7.0 | 0.9 |
| Example 34 | adhesive polyolefin, ADMER QE840 | 9.2 | 0.89 |
| Example 35 | reactive group-containing LDPE Novatech LC605Y | 7.3 | 0.918 |
| Example 36 | adhesive polyolefin, ADMER NE827 | 5.6 | 0.909 |
|  | LDPE Novatech, LC600A (outermost layer) | 7.0 | 0.918 |
| Comp. Ex. 8 to 10 | reactive group-containing LDPE, Novatech LC605Y | 7.3 | 0.918 |

Table 7 shows the ionically crosslinked ratios of the gas-barrier layers obtained in Examples and Comparative Examples, contents of the monovalent metal elements and the polyvalent metal elements as found by using the ICP emission spectroscope, contents of nitrogen per the total amount of nitrogen and carbon as found by using the organic element analyzer, contents of nitrogen per the total amount of carbon, oxygen and nitrogen in the surface of the gas-barrier layer, in the undercoating and in the region (x) as found by the analysis of the compositions by using XPS, weight losses of from 200°C to 320°C as found by the thermogravimetric analysis, differences of when tan $\delta$ at 50°C is subtracted from tan $\delta$ at 200°C in the measurement of dynamic viscoelasticities, amounts of permeation of oxygen-nitrogen-water vapor, and thermal conductivities.

EP 3 203 133 A1

Table 7

| | Contents of elements in the gas-barrier layer (B) | | | Content of nitrogen as measured by XPS | | | *1 | *2 |
|---|---|---|---|---|---|---|---|---|
| | Polyvalent metal (wt%) | Monovalent metal (wt%) | Amount of nitrogen (wt%) per total amount of nitrogen and carbon | In the surface of layer (B) (atm%) | Layer (A) | | *1 | *2 |
| | | | | | Region (a) (atm%) | Other than the region (a) (atm%) | | |
| Ex. 25 | 15.1 | 0.68 | 0.10 | 1.6 | - | - | 63 | 0.63 |
| Ex. 26 - 35 | 13.1 | 0.70 | 0.15 | 1.3 | 5.8 | 3.1 | 54 | 0.54 |
| Ex. 36 | 13.1 | 0.70 | 0.15 | 1.3 | 5.8 | 3.1 | 54 | 0.54 |
| Comp. Ex. 8 | - | - | - | - | - | - | - | - |
| Comp. Ex. 9 | - | - | - | - | - | - | - | - |
| Comp. Ex. 10 | - | - | - | - | - | - | - | - |

*1: Ionically crosslinking ratio, %

*2: Equivalents used for the ionic crosslinking

Table 7 (continued)

| | *1 | *2 | Amounts of gases permeated through the sheath | | | Thermal conductivity of the vacuum heat insulating material W/mK | | |
|---|---|---|---|---|---|---|---|---|
| | | | Oxygen cc/m$^2$· day· atm | Nitrogen cc/m$^2$· day· atm | Water vapor g/m$^2$· day· atm | Initially | After 100 days | Difference |
| Ex. 25 | 5 | 0.029 | <0.1 | <0.1 | 0.6 | 0.0024 | 0.0046 | 0.0022 |
| Ex. 26 – 35 | 6 | 0.032 | <0.1 | <0.1 | 0.6 | described in Table 8 | | |
| Ex. 36 | 6 | 0.032 | <0.1 | <0.1 | 0.6 | 0.0025 | 0.0050 | 0.0025 |
| Comp. Ex. 8 | 13 | 0.058 | 0.7 | 0.8 | 0.6 | 0.0026 | 0.0088 | 0.0062 |
| Comp. Ex. 9 | 12 | <0.010 | 0.7 | 0.8 | 0.6 | 0.0025 | 0.0089 | 0.0064 |
| Comp. Ex. 10 | – | ※<0.010 | 3.25 | 3.47 | 0.6 | 0.0025 | 0.0745 | 0.0720 |

*1: Weight loss of gas-barrier layer at 200°C - 320°C

*2: Difference of tan δ of gas-barrier layer at 200°C and 50°C

※: Value measured in the aluminum vapor-deposited layer.

Table 8

| | Thermal conductivity W/mK | | |
| --- | --- | --- | --- |
| | Initially | After 100 days | Difference |
| Example 26 | 0.0025 | 0.0046 | 0.0021 |
| Example 27 | 0.0024 | 0.0047 | 0.0023 |
| Example 28 | 0.0025 | 0.0047 | 0.0022 |
| Example 29 | 0.0026 | 0.0048 | 0.0022 |
| Example 30 | 0.0025 | 0.0046 | 0.0021 |
| Example 31 | 0.0025 | 0.0046 | 0.0021 |
| Example 32 | 0.0025 | 0.0047 | 0.0022 |
| Example 33 | 0.0025 | 0.0047 | 0.0022 |
| Example 34 | 0.0024 | 0.0046 | 0.0022 |
| Example 35 | 0.0024 | 0.0048 | 0.0024 |

(Example 37)

An aluminum layer was formed by vapor deposition on the polyethylene terephthalate of the polyethylene terephthalate film (Tetrite PC produced by Oike & Co., Ltd..) on which an aluminum layer has already been formed by vapor deposition in a thickness of 12 $\mu$m to thereby obtain a polyethylene terephthalate (PET) film having aluminum layers formed on both surfaces thereof by vapor deposition. Next, as the polycarboxylic acid type polymer, a polyacrylic acid (AC-10LHP, Mw = 250,000, produced by Toa Gosei Co., Ltd.) was added to a mixed solvent of methanol/2-propanel/MEK/water (weight ratio of 25/25/40/10) in such an amount that the solid content thereof was 6% by weight. Next, an aqueous solution containing 20% by weight of sodium hydroxide was so added that the polyacrylic acid was neutralized to a degree of 2% to thereby obtain a main solution. To the above main solution was, further, added a straight-chain aliphatic polyisocyanate (Sumidur N3300, isocyanulate type based on 1,6-hexamethylene diisocyanate, solid component: 100% by weight, Tg = -60°C, Mn = 680, produced by Sumika-Bayer Urethane Co.) in an amount of 0.4 parts by weight with respect to the polyacrylic acid, followed by the addition of an alicyclic polyisocyanate (Desmodur Z4470, isocyanulate type based on isophorone diisocyanate, dissolved in butyl acetate, solid component: 70% by weight, Tg = 70°C, Mn = 1200, produced by Sumika-Bayer Urethane Co.) in such an amount that the weight thereof after the solvent was removed was 0.4 parts by weight with respect to the polyacrylic acid, to thereby prepare a coating solution for forming a barrier material precursor. By using a bar coater, the coating solution was applied onto the one aluminum-deposited surface of the PET film that has aluminum layers vapor-deposited on both surfaces thereof, and was, thereafter, heat-treated in a conveyer-type electric oven under the conditions of a temperature of 105°C and a passing time of 40 seconds to obtain a film having a barrier material precursor. To one liter of tap water, there was added calcium chloride in an amount of 360 mmols (40 g) calculated as metal, followed by the addition of 11g of calcium hydroxide to adjust the pH to be 12.0 (measured at a water temperature of 24°C). Thereafter, the water was heated at 40°C, stirred well, and the film having the barrier material precursor was dipped therein for 3 seconds. The film was then taken out from the hot water and dried to obtain a gas-barrier material having a gas-barrier layer applied in an amount of 1.5 g/m$^2$.
Described below is how to prepare the sheath.
A gas-barrier laminate was obtained by corona-treating the gas-barrier layer of the gas-barrier material, and extrusion-laminating thereon a reactive group-containing low-density polyethylene resin (hereinafter, "reactive group-containing LDPE") (Novatech™LD LC605Y, MFR: 7.3 g/10 min., density: 0.918 g/cm$^3$, produced by Japan Polyethylene Corporation.) as a heat-melt-adhesion layer in a thickness of 50 $\mu$m at 260°C and a line speed of 100 m/min. On the aluminum-deposited layer of the gas-barrier laminate on the side opposite to the melt-adhesion layer, there were successively dry-laminated an urethane adhesive in a thickness of 2 $\mu$m and a biaxially stretched nylon film in a thickness of 15 $\mu$m to serve as the outermost layer to thereby obtain a sheath. By using the sheath, a vacuum heat insulating material was obtained by the above-mentioned method of producing the vacuum heat insulating material.

(Example 38)

An aluminum layer was formed by vapor deposition on the polyethylene terephthalate of the polyethylene terephthalate film (Tetrite PC produced by Oike & Co., Ltd.) on which an aluminum layer has already been formed by vapor deposition in a thickness of 12 $\mu$m to thereby obtain a polyethylene terephthalate (PET) film having aluminum layers formed on both surfaces thereof by vapor deposition.

Two kinds of polyester polyols at a weight ratio of 50/50, Vylon 200 (non-aqueous resin produced by Toyo Boseki Co. containing no metal element in the resin skeleton thereof: confirmed by the X-ray fluorometry) and Vylon GK570 (non-aqueous resin produced by Toyo Boseki Co. containing a metal element in the resin skeleton thereof: confirmed by the X-ray fluorometry) were dissolved in an ethyl acetate/MEK mixed solvent (weight ratio of 65/35), and to which calcium carbonate (CS3N-A, primary particle size: 0.3 $\mu$m, produced by Ube Material Industries, Ltd.) was so added that the amount thereof was 280 parts by weight and that the total solid content was 35% by weight, followed by dispersion in a mill with glass beads (BZ-04 produced by Toshinriko Co.) to thereby obtain a paste thereof. To the paste was, further, added a straight-chain aliphatic polyisocyanate (Sumidur N3300, produced by Sumika-Bayer Urethane Co.) in an amount of 20 parts by weight with respect to the polyester polyols, followed by the addition of an alicyclic polyisocyanate (Desmodur Z4470, produced by Sumika-Bayer Urethane Co.) in such an amount that the weight thereof after the solvent was removed was 20 parts by weight with respect to the polyester polyols. The solution was adjusted with the above mixed solvent such that the total solid component was 25% by weight to thereby obtain a coating solution for forming the undercoating, comprising the composition that contains the alkaline compound of the polyvalent metal.

By using the bar coater, the coating solution for forming the undercoating was applied onto one aluminum-deposited surface of the PET film that has aluminum layers deposited on both surfaces thereof, and was, thereafter, heat-treated in the box-type electric oven under the conditions of a temperature of 70°C for 2 minutes to obtain a film having an undercoating applied in an amount of 1.4 g/m$^2$.

As the polycarboxylic acid type polymer, a polyacrylic acid (AC-10LP, Mw = 25,000, produced by Toa Gosei Co., Ltd.) was dissolved in a water/acetone mixed solvent (weight ratio of 80/20) such that the solid content was 10% by weight, and to which an aqueous solution containing 20% by weight of sodium hydroxide was added such that the polyacrylic acid was neutralized to a degree of 2.5% to thereby prepare a main solution. By using the bar coater, the main solution was applied in an amount of 1.5 g/m$^2$ onto the undercoating of the film to obtain a gas-barrier material precursor layer. Here, the amount the gas-barrier material precursor layer is applied stands for the amount of application thereof of when the main solution is directly applied onto the PET film that has the aluminum layers formed by vapor deposition on both surfaces thereof and is dried, i.e., when the polyacrylic acid only in the main solution is dried without permitting the formation of ionic crosslinking.

The film on which the main solution has been applied was heat-treated in a conveyer-type electric oven under the conditions of a temperature of 80°C and a passing time of 5 seconds to obtain a film having, on the undercoating, a gas-barrier layer that is forming ionic crosslinking in the precursor layer, i.e., to obtain a gas-barrier material. By using the gas-barrier material, a sheath and a vacuum heat insulating material were obtained in the same manner as in Example 37.

(Example 39)

A gas-barrier material was obtained in the same manner as in Example 38 but forming an undercoating and a gas-barrier layer on the aluminum-deposited layer of the polyethylene terephthalate film (Tetrite PC produced by Oike & Co., Ltd.) that has the aluminum layer formed by vapor deposition in a thickness of 12 $\mu$m on only one surface thereof instead of on the PET film that has the aluminum layers formed by vapor deposition on both surfaces thereof. A gas-barrier laminate was obtained by corona-treating the gas-barrier layer of the gas-barrier material, and extrusion-laminating thereon the reactive group-containing low-density polyethylene resin as a heat-melt-adhesion layer in a thickness of 50 $\mu$m at 260°C and a line speed of 100 m/min. Aluminum was vapor-deposited on the polyethylene terephthalate of the gas-barrier laminate, and on which were successively dry-laminated an urethane adhesive in a thickness of 2 $\mu$m and a biaxially stretched nylon film in a thickness of 15 $\mu$m to serve as the outermost layer to thereby obtain a sheath. By using the sheath, a vacuum heat insulating material was obtained by the above-mentioned method of producing the vacuum heat insulating material.

(Comparative Example 11)

A sheath and a vacuum heat insulating material were obtained in the same manner as in Example 37 but extrusion-laminating the reactive group-containing LDPE on the PET film that has aluminum layers formed by vapor deposition on both surfaces thereof instead of applying the coating solution for forming the barrier material precursor on the PET film that has aluminum layers formed by vapor deposition on both surfaces thereof.

Table 9

| | Undercoating (A) | | | | | | | | | |
|---|---|---|---|---|---|---|---|---|---|---|
| | Main resin | | | Isocyanate type curing agent | | | | Alkaline compound of polyvalent metal | Solvent composition | |
| | | | | Aliphatic | | Alicyclic | | | | |
| | Vylon GK570 | Vylon 200 | Vylon 550 | Sumidur N3300 (HDI-nulate) | Sumidur HT (HDI adduct) | Desmodur Z4470 (IPDI-nulate) | TAKENATE D110N (XDI adduct) | Kind | Ethyl acetate | MEK |
| | *1 | *1 | *1 | *1 | *1 | wt. pts. | wt. pts. | wt. pts. | wt. % | wt. % |
| Ex. 37 | layer (A) is not formed | | | | | | | | | |
| Ex. 38 | 50 | 50 | | 20 | | 20 | | *2 280 | 65 | 35 |
| Ex. 39 | 50 | 50 | | 20 | | 20 | | *2 280 | 65 | 35 |
| Comp. Ex. 11 | layer (A) is not formed | | | | | | | | | |

*1: wt. pts., *2: calcium carbonate

EP 3 203 133 A1

EP 3 203 133 A1

Table 9 (continued)

| | Gas-barrier material precursor | | | | | | | | | | *3 |
|---|---|---|---|---|---|---|---|---|---|---|---|
| | Polyacrylic acid | Monovalent metal compound | | Isocyanate type curing agent | | Solvent composition | | | | | |
| | | | | Aliphatic | Alicyclic | | | | | | |
| | Kind | NaOH | KOH | Sumidur N3300 (HDI-nulate) | Desmodur Z4470 (IPDI-nulate) | MeOH | IPA | MEK | Acetone | Water | |
| | | *1 | *1 | wt. pts. | wt. pts. | *2 | *2 | *2 | wt. % | wt. % | |
| Ex. 37 | AC-10LHP | 2 | | 0.4 | 0.4 | 25 | 25 | 40 | | 10 | dipped, Ca |
| Ex. 38 | AC-10LP | 2.5 | | | | | | | 20 | 80 | |
| Ex. 39 | AC-10LP | 2.5 | | | | | | | 20 | 80 | |
| Comp. Ex. 11 | | | | | | | | | | | |

*1: Neutralization %, *2: wt. %,

*3: Gas-barrier precursor treated with solution containing alkaline compound of polyvalent metal

Table 10

| | Layer constitution |
|---|---|
| Example 37 | heat-melt-adhesion layer - layer (B) - AL-deposited layer - PET - AL-deposited layer / ONY |
| Example 38 | heat-melt-adhesion layer - layer (B) - layer (A) - AL-deposited layer - PET - AL-deposited layer / ONY |
| Example 39 | heat-melt-adhesion layer - layer (B) -layer (A) - AL-deposited layer - PET - AL-deposited layer / ONY |
| Comp. Ex. 11 | heat-melt-adhesion layer - AL-deposited layer - PET - AL-deposited layer / ONY |

Table 11

| | Resin for heat-melt-adhesion layer | MFR | Density |
|---|---|---|---|
| Examples 37, 38, 39, Comp. Ex. 11 | reactive group-containing LDPE, Novatech LC605Y | 7.3 | 0.918 |

Table 12 shows the ionically crosslinked ratios of the gas-barrier layers obtained in Examples and Comparative Examples, contents of the monovalent metal elements and the polyvalent metal elements as found by using the ICP emission spectroscope, contents of nitrogen per the total amount of nitrogen and carbon as found by using the organic element analyzer, contents of nitrogen per the total amount of carbon, oxygen and nitrogen in the surface of the gas-barrier layer, in the undercoating and in the region (x) as found by the analysis of the compositions by using XPS, weight losses of from 200°C to 320°C as found by the thermogravimetric analysis, differences of when tan $\delta$ at 50°C is subtracted from tan $\delta$ at 200°C in the measurement of dynamic viscoelasticities, amounts of permeation of oxygen-nitrogen-water vapor, and thermal conductivities.

Table 12

| | Contents of elements in the gas-barrier layer (B) | | | Content of nitrogen as measured by XPS | | | *1 | *2 |
|---|---|---|---|---|---|---|---|---|
| | Polyvalent metal (wt%) | Monovalent metal (wt%) | Amount of nitrogen (wt%) per total amount of nitrogen and carbon | In the surface of layer (B) (atm%) | Layer (A) | | | |
| | | | | | Region (a) (atm%) | Other than the region (a) (atm%) | | |
| Ex. 37 | 15.1 | 0.68 | 0.10 | 1.6 | - | - | 63 | 0.63 |
| Ex. 38 | 13.1 | 0.70 | 0.15 | 1.3 | 5.8 | 3.1 | 54 | 0.54 |
| Ex. 39 | 13.1 | 0.70 | 0.15 | 1.3 | 5.8 | 3.1 | 54 | 0.54 |
| Comp. Ex. 11 | - | - | - | - | - | - | - | - |

*1: Ionically crosslinking ratio, %

*2: Equivalents used for the ionic crosslinking

EP 3 203 133 A1

Table 12 (continued)

| | *1 | *2 | Amounts of gases permeated through the sheath | | | Thermal conductivity of the vacuum heat insulating material W/mK | | |
| | | | Oxygen cc/m$^2 \cdot$ day$\cdot$ atm | Nitrogen cc/m$^2 \cdot$ day$\cdot$ atm | Water vapor g/m$^2 \cdot$ day$\cdot$ atm | Initially | After 100 days | Difference |
|---|---|---|---|---|---|---|---|---|
| Ex. 37 | 5 | 0.029 | <0.1 | <0.1 | 0.3 | 0.0024 | 0.0035 | 0.0011 |
| Ex. 38 | 6 | 0.032 | <0.1 | <0.1 | 0.3 | 0.0025 | 0.0036 | 0.0011 |
| Ex. 39 | 6 | 0.032 | <0.1 | <0.1 | 0.3 | 0.0025 | 0.0034 | 0.0009 |
| Comp. Ex. 11 | - | ※<0.010 | 3.25 | 3.47 | 0.3 | 0.0025 | 0.0715 | 0.0690 |

*1: Weight loss of gas-barrier layer at 200°C - 320°C

*2: Difference of tan δ of gas-barrier layer at 200°C and 50°C

Examples were all evaluated to provide good results. In Comparative Example 2 which used the polyvalent metal element in a small amount, however, the amounts of oxygen-nitrogen permeation were large. In Comparative Example 4 that used the monovalent metal element in an excess amount, the amounts of oxygen-nitrogen permeation were slightly large when measured at high temperatures. In Comparative Example 3 in which the nitrogen content was small per the total amount of nitrogen and carbon as found by the organic element analyzer, the amounts of oxygen-nitrogen permeation were slightly large when measured at high temperatures. In Comparative Examples 1 and 5 in which the nitrogen content was large per the total amount of nitrogen and carbon as found by the organic element analyzer, the amounts of oxygen-nitrogen permeation were large. In Comparative Examples 6, 10 and 11 using no gas-barrier material, the amounts of oxygen-nitrogen permeation were large. In Comparative Example 7 having no aluminum-deposited layer, the amounts of oxygen-nitrogen permeation were favorable but the amount of water vapor permeation was large. In all Comparative Examples, the thermal conductivities differed greatly after 100 days have passed from the initial conductivities.

Industrial Applicability:

Upon using the sheath having excellent gas-barrier property and flexibility, the vacuum heat insulating material of the present invention is capable of maintaining the state of a reduced pressure therein for extended periods of time and, therefore, of maintaining excellent heat insulating capability. Besides, since the sheath is formed in a reduced thickness, the vacuum heat insulating material meets the use where it is required to decrease the thickness and weight. The vacuum heat insulating material can be, further, favorably used as building materials of houses in addition to the use for retaining heat or for refrigerating use such as in refrigerators and cooler boxes. Moreover, the sheath used for the vacuum heat insulating material of the invention has advantage in productivity and economy, and can, therefore, be used in general applications, too.

Description of Reference Numerals:

1 vacuum heat insulating material
2 core material
3 sheath
4 heat-melt-adhesion layer
5 adhesive layer
6 gas-barrier material
6a polyethylene terephthalate
$6b_i$, $6b_{ii}$ aluminum-deposited layers
6c undercoating
6d gas-barrier layer
7 vapor-deposited film
7a base material resin
7b vapor-deposited layer
8 protection layer
9 vapor-deposited layer
11 gas-barrier layer
12 undercoating
13 plastic base material

**Claims**

1. A vacuum heat insulating material including a core material and a sheath for covering the core material, an interior of said vacuum heat insulating material being sealed to maintain a reduced pressure therein, wherein said sheath includes a gas-barrier laminate that has at least a heat-melt-adhesion layer, a vapor-deposited layer and a gas-barrier material, and said gas-barrier material has a gas-barrier layer that includes a polycarboxylic acid type polymer and contains a monovalent metal element in an amount of not more than 1.4% by weight, a polyvalent metal element in an amount of at least not less than 5. 0% by weight, and a nitrogen element in an amount of 0.01 to 3.0% by weight per an total weight of nitrogen and carbon.

2. The vacuum heat insulating material according to claim 1, wherein said polycarboxylic acid type polymer is a poly(meth)acrylic acid.

3. The vacuum heat insulating material according to claim 1 or 2, wherein said polycarboxylic acid type polymer is partly neutralized in a range of a molar ratio relative to a carboxyl groups of not more than 4.5%.

4. The vacuum heat insulating material according to any one of claims 1 to 3, wherein said monovalent metal element is sodium or potassium.

5. The vacuum heat insulating material according to any one of claims 1 to 4, wherein said polyvalent metal element is calcium or magnesium.

6. The vacuum heat insulating material according to any one of claims 1 to 5, wherein in a surface layer of said gas-barrier layer, a content of nitrogen is not less than 1 atm% per the total weight of oxygen and nitrogen.

7. The vacuum heat insulating material according to any one of claims 1 to 6, wherein said heat-melt-adhesion layer is formed by extrusion-applying a thermoplastic resin onto said gas-barrier material.

8. The vacuum heat insulating material according to any one of claims 1 to 7, wherein said gas-barrier layer is formed on a plastic base material on which a layer has been vapor-deposited.

9. The vacuum heat insulating material according to any one of claims 1 to 8, wherein the vacuum heat insulating material includes at least a gas-barrier laminate in which said gas-barrier layer is formed on at least one of the layers that have been vapor-deposited on both surfaces of the plastic base material, and the heat-melt-adhesion layer of the thermoplastic resin is formed by being extrusion-applied onto said gas-barrier layer.

10. The vacuum heat insulating material according to any one of claims 7 to 9, wherein said thermoplastic resin is a polyolefin resin, an ethylene-(meth)acrylic acid copolymer or an ionomer resin.

11. The vacuum heat insulating material according to any one of claims 7 to 9, wherein said thermoplastic resin is any one of a polyolefin resin polymerized by using a single site type catalyst, a polyolefin resin to which no antioxidant has been added, or a polyolefin resin containing a reaction group capable of forming a chemical bond with a carboxyl group or a hydroxyl group.

12. The vacuum heat insulating material according to claim 10 or 11, wherein said polyolefin resin has a density of not more than 0.950 g/cm$^3$.

13. The vacuum heat insulating material according to any one of claims 10 to 12, wherein said polyolefin resin has an MFR of not less than 7.0 g/10 min.

14. The vacuum heat insulating material according to any one of claims 1 to 13, wherein said gas-barrier layer has a weight loss of not more than 10% as measured by a thermogravimetric analysis (TGA) from 200°C up to 320°C at a temperature elevating rate of 10°C/min., and has a difference of not less than 0.010 of when tan $\delta$ at 50°C is subtracted from tan $\delta$ at 200°C in a measurement of dynamic viscoelasticity (DMS) at 20 Hz.

15. The vacuum heat insulating material according to any one of claims 1 to 14, wherein said gas-barrier material has an undercoating that contains an isocyanate compound having at least two isocyanate groups in a molecule thereof and is formed on one surface of either the layer vapor-deposited on the plastic base material or the plastic base material, said gas-barrier material, further, having a gas-barrier layer formed on said undercoating.

16. The vacuum heat insulating material according to claim 15, wherein at least either said gas-barrier layer or said undercoating is adjacent to the vapor-deposited layer.

17. The vacuum heat insulating material according to claim 15, wherein said gas-barrier material has two vapor-deposited layers, and the gas-barrier layer and the undercoating are formed between said two vapor-deposited layers.

18. The vacuum heat insulating material according to claim 15, wherein both said gas-barrier layer and said undercoating are adjacent to the vapor-deposited layers.

19. The vacuum heat insulating material according to any one of claims 15 to 18, wherein said undercoating contains an alkaline compound of a polyvalent metal.

20. The vacuum heat insulating material according to claim 19, wherein the alkaline compound of the polyvalent metal includes at least a carbonate or a hydroxide of calcium or magnesium.

21. The vacuum heat insulating material according to any one of claims 15 to 20, wherein said isocyanate compound is a combination of a straight-chain aliphatic isocyanate compound and an alicyclic isocyanate compound having an alicyclic structure in a skeleton thereof.

22. The vacuum heat insulating material according to claim 21, wherein the aliphatic isocyanate compound has an isocyanulate structure.

23. The vacuum heat insulating material according to any one of claims 15 to 22, wherein a region (x) free of the alkaline compound of the polyvalent metal is formed in said undercoating on a side of the gas-barrier layer, a nitrogen content in said region (x) being larger than the nitrogen content in the undercoating other than said region (x).

Fig. 1

Fig. 2

Fig. 3

Fig. 4

Fig. 5

Fig. 6

Fig. 7

Fig. 8

Fig. 9

```
                    ┌─ 6bii ┐
                    ├─ 6d   │
                    ├─ 6c   ├ 6
                    ├─ 6bi  │
                    └─ 6a   ┘
```

Fig. 10

```
                    ┌─ 6d   ┐
                    ├─ 6c   │
                    ├─ 6a   ├ 6
                    └─ 6bi  ┘
```

Fig. 11

```
                    ┌─ 6bii ┐
                    ├─ 6d   │
                    ├─ 6c   ├ 6
                    ├─ 6a   │
                    └─ 6bi  ┘
```

Fig. 12

```
                    ┌─ 6bi  ┐
                    ├─ 6d   │
                    ├─ 6c   ├ 6
                    └─ 6a   ┘
```

## INTERNATIONAL SEARCH REPORT

| International application No. |
|---|
| PCT/JP2014/076529 |

A. CLASSIFICATION OF SUBJECT MATTER
*F16L59/06*(2006.01)i, *B32B27/00*(2006.01)i, *B32B27/30*(2006.01)i

According to International Patent Classification (IPC) or to both national classification and IPC

B. FIELDS SEARCHED

Minimum documentation searched (classification system followed by classification symbols)
F16L59/06, B32B27/00, B32B27/30

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-236638 A  (Kuraray Co., Ltd.),<br>21 October 2010 (21.10.2010),<br>paragraphs [0047] to [0243]; fig. 1 to 2<br>(Family: none) | 1-23 |
| A | JP 2006-308086 A  (Kuraray Co., Ltd.),<br>09 November 2006 (09.11.2006),<br>paragraphs [0010] to [0117]; fig. 1 to 3<br>& US 2009/0297741 A1      & EP 1870342 A1<br>& WO 2006/104053 A1      & KR 10-2007-0119048 A<br>& CA 2606531 A            & CN 101184672 A<br>& AU 2006229237 A         & CN 102173321 A<br>& ES 2468222 T | 1-23 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 December 2014 (19.12.14) | 06 January 2015 (06.01.15) |

| Name and mailing address of the ISA/<br>Japan Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/076529

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-135892 A (Dainippon Printing Co., Ltd.), 19 July 2012 (19.07.2012), paragraphs [0020] to [0034] (Family: none) | 1-23 |
| A | JP 2004-130654 A (Toppan Printing Co., Ltd.), 30 April 2004 (30.04.2004), paragraphs [0026] to [0090]; fig. 1 to 5 (Family: none) | 1-23 |
| A | JP 2005-337405 A (Kureha Chemical Industry Co., Ltd.), 08 December 2005 (08.12.2005), paragraphs [0008] to [0036] (Family: none) | 1-23 |
| A | JP 3685206 B1 (Matsushita Electric Industrial Co., Ltd.), 17 August 2005 (17.08.2005), paragraphs [0018] to [0094] & JP 2006-46442 A | 1-23 |

Form PCT/ISA/210 (continuation of second sheet) (July 2009)

## REFERENCES CITED IN THE DESCRIPTION

**Patent documents cited in the description**

- JP 2004172493 A
- JP 2004130654 A
- JP 2005337405 A
- JP 3685206 B